# NEUE EUROPÄISCHE PATENTSCHRIFT

(11) **EP 0 753 234 B2**
(45) Veröffentlichungstag und Bekanntmachung des Hinweises auf die Entscheidung über den Einspruch: **13.06.2001**
(45) Hinweis auf die Patenterteilung: 26.08.1998
(21) Anmeldenummer: 95915152.3
(22) Anmeldetag: 24.03.1995
(51) Int. Cl.: H04N 7/087, H04N 5/445

(54) **VERFAHREN ZUR ERSTELLUNG EINER ELEKTRONISCHEN PROGRAMMZEITSCHRIFT UND SCHALTUNG HIERFÜR**
METHOD OF PRODUCING AN ELECTRONIC TV/RADIO-PROGRAMME TIMETABLE
PROCEDE POUR L'ETABLISSEMENT D'UN PROGRAMME ELECTRONIQUE D'EMISSIONS

(30) Priorität: 26.03.1994 DE 4410547
(43) Veröffentlichungstag der Anmeldung: 15.01.1997
(73) Patentinhaber: LOEWE OPTA GmbH, 96317 Kronach (DE)
(72) Erfinder: SCHAAS, Gerhard, D-96472 Rödental (DE)
(86) Internationale Anmeldenummer: EP9501106
(87) Internationale Veröffentlichungsnummer: WO9526608

(56) Entgegenhaltungen:
- EP-A- 0 337 336
- EP-A- 0 460 520
- DE-A- 4 217 246
- DE-C- 3 335 082
- DE-C- 3 909 334
- DE-C- 3 928 175
- GB-A- 2 126 002
- US-A- 4 894 714
- US-A- 5 231 493
- Rundfunktechnische Mitteilungen, Jahrgang 30 (1986), Heft 5, Seiten 223-229
- Funkschau, Heft 3/1988, Seiten 46-49

## Beschreibung

Die Erfindung betrifft ein Verfahren zur Erstellung einer elektronischen Programmzeitschrift für Fernseh- und/oder Tonrundfunkprogramme in einem Gerät zum Empfang von Fernseh- und/oder Tonrundfunksignalen von verschiedenen Sendeanstalten oder Programmträgern zur Durchführung des Verfahrens.

Rundfunkzeitschriften, aus denen die einzelnen Programme bzw. Sendebeiträge zu entnehmen sind, die jeweils am Empfangsort empfangbar sind, und zwar sowohl für den Fernsehrundfunk als auch für den Tonrundfunk, sind in Schriftform hinlänglich bekannt.

Darüber hinaus ist seit Einführung des Videotextsystems bekannt, daß jene Sendeanstalten, die mit ihren Programmen Videotextseiten aussenden, auch Programmübersichtsseiten über Tagesprogramme oder Programme der Folgetage bis hin zu Programminformationen über einen längeren Zeitraum mit aussenden, die von dem Empfänger, der einen Videotextempfänger aufweist, empfangen, gespeichert und wahlweise angezeigt werden können. Verschiedene Sendeanstalten senden darüber hinaus auch Programmübersichten anderer Sendeanstalten aus. Dadurch ist es dem Benutzer möglich, stets eine aktualisierte Programmanzeige des jeweils gewählten Senders oder im Fall, daß der Sender auch Programmanzeigen anderer Sender überträgt, diese ebenfalls auf dem Display seines Empfangsgerätes angezeigt zu erhalten. Als Empfangsgerät dient in der Regel ein Fernsehempfangsgerät oder ein Videorecorder, der an ein Fernsehempfangsgerät angeschlossen ist, so daß der großflächige Bildschirm des Fern-sehempfangsgerätes für die Darstellung der Programmtafeln verwendet werden kann. Dies gilt im Falle, daß der Videotextdecoder in dem Fernsehempfangsgerät eingebaut ist, gleichermaßen auch bei einer Ausführung, bei der zwar ein Videoaufzeichnungsgerät vorhanden ist, aber die Anzeige über den Bildschirm des über einen Bus angeschlossenen Fernsehempfängers erfolgt. Das Videotext-System, jetzt Fernsehtext genannt, ist in der Fachzeitschrift "Rundfunktechnische Mitteilungen", 1983, Seiten 116 bis 134, beschrieben. Daneben ist es bekannt, eine Programmierung des Videorecorders in Abhängigkeit der mit den Videotextseiten bzw. Videotexttafeln übertragenen Programmübersichten vorzunehmen, in der Weise, daß aus der Programmübersichtstafel, die z.B. 25 Zeileneinträge und Programmdaten enthält, das jeweilige Programm ausgewählt wird, um damit den Videorecorder zu steuern. Die ausgewählten Programmdaten werden in einem Speicher des Videorecorders abgelegt und von dem Prozessor des Videorecorders überwacht, so daß zu den in den Programmdaten zugeordneten Einschaltzeiten und Ausschaltzeiten eine zeitabhängige Ansteuerung des Videorecorders erfolgt (VPV-Verfahren, beschrieben in "Rundfunktechnische Mitteilungen", 1986, Seiten 223 bis 229)). Dieses Verfahren, genauso auch andere Einstellverfahren, bei denen die Einschalt- und Ausschaltzeiten individuell eingebbar sind, ist auch dann möglich, wenn neben den Videotext-Programmdaten auch VPS-Daten, also Daten zur programmabhängigen Steuerung, mit von dem Sender übertragen werden. Wird bei der Programmierung eingegeben, daß es sich um VPS-Daten handelt, bzw. sind diese bereits in der Programmübersicht in der Videotextseite ausgewiesen, so erfolgt die Steuerung des angeschalteten Videorecorders abhängig von den Programmdaten, die programmabhängig übertragen werden, so daß unabhängig von der tatsächlichen Einschaltzeit auch bei Zeitverschiebungen des Programmbeginns eine Aufzeichnung des Programms zur Realzeit der Ausstrahlung des Programms erfolgt und die Abschaltung ebenfalls über das VPS-Signal gesteuert erfolgt.
Das Verfahren ist in der Fachzeitschrift "Rundfunktechnische Mitteilungen", 1985, Seiten 161 bis 169, beschrieben.

Es ist ersichtlich, daß für die Vorprogrammierung, z.B. für die Aufzeichnung vom Videorecorder, der Benutzer die Videotextseiten der einzelnen Sender, die diese mit aussenden, überprüfen muß, d.h. daß er zu einer Programmierung auf verschiedene Empfangskanäle umschalten muß, um die Programmierung vorzunehmen. Auch wenn einzelne Sendervon anderen Sendern ebenfalls die Programmübersichten durch Videotext-Programmtafeln übertragen, bleibt es dem Benutzer nicht erspart, zunächst alle jene Sender aufzurufen, um die Programmierung vomehmen zu können, die ebenfalls eine Programmvorschau ermöglichen. Darüber hinaus erhält der Benutzer keine Übersicht über alle Programme, die in einem bestimmten Zeitraum, z. B. in der nächsten Stunde oder am nächsten Tag oder aber auch innerhalb der nächsten Woche, von allen erreichbaren Sendern am Empfangsort geplant ausgestrahlt werden. Hierzu greift er in bekannter Weise zu den schriftbildlich vorliegenden Programmzeitschriften, in denen die Programme tabellarisch den Sendern zugeordnet aufgelistet sind. Um sein Empfangsgerät auf den entsprechenden terrestrischen oder Satellitensender oder über Kabelkanäle empfangenen Sender abstimmen zu können, muß er die Kanalnummer bzw. im Falle der Verwendung von Tonrundfunksendungen die Frequenzen im Gerät einstellen, um das entsprechende Programm empfangen zu können, das er sehen oder hören will. Die Programmierung mittels verschlüsselter Daten nach dem Viewshow-Verfahren durch Übernahme der Schlüsselzahlen aus einer Programmzeitschrift ist ebenfalls möglich.

Aus der DE 30 31 527 C2 ist ein Verfahren zur alphanumerischen Stationsanzeige bei Empfängern für hochfrequente elektrische Schwingungen bekannt, nach welchem in weiteren nichtflüchtigen Speichern Tabellen mit einer Leistungskennung und einer Senderstandortnummer entsprechend der geographischen Verteilung der Senderstandort abgespeichert sind und den Tabellen für die Sendernamen Sonderprogramme und Sendefrequenzen zugeordnet werden. Diese Sendetabellen werden aufgrund der empfangenen Frequenzen und des Vergleichs mit den den Standortnummem im Empfänger entsprechenden abgelegten Kenndaten verglichen und die Tabellendaten alphanumerisch zur Anzeige gebracht. Die Sendebeiträge, die im Sinne der vorliegenden Erfindung als Programme bezeichnet sind, werden dabei im einzelnen nicht angegeben, sondern nur die Senderkurzbezeichnung und der Standort des Senders sowie ggf. die Senderstandortnummer, Leistungskennung und Frequenz.

DE-A-3 527 939 offenbart ein Verfahren zur Erstellung einer elektronischen Programmzeitschrift mit Abspeicherung von Programmdaten nach einem vorgegebenen Ordnungsalgorithmus.

Ausgehend von diesem Stand der Technik liegt der Erfindung die Aufgabe zugrunde, eine neuartige Programmzeitschrift, nämlich in Form einer elektronischen Zeitschrift, und ein Verfahren zur Erstellung derselben anzugeben, die es dem Benutzer gestattet, in übersichtlicher Form auf dem Bildschirm selbst alle verfügbaren und/oder am Ort empfangbaren Programme während bestimmter Zeitabschnitte übersichtlich dargestellt zu erhalten, gleich von welchem Sender sie anliegen, um darauf gestützt, eine Anwahl des entsprechenden Senders unter Ausnutzung der gespeicherten Programmdaten direkt vomehmen zu können.

Die Aufgabe löst die Erfindung durch das im Anspruch 1 angegebene Verfahren sowie durch eine Schaltung zur Durchführung des Verfahrens, das im Anspruch 32 angegeben ist.

Vorteilhafte Verfahrensschritte sind detailliert in den Ansprüchen 2 bis 31 im einzelnen angegeben. Schaltungen zur Durchführung der Verfahren sind weiterhin in den Ansprüchen 33 bis 56 angegeben. Auf die in den Ansprüchen angegebenen Verfahren und Schaltungsausführungen und vorteilhafte Weiterbildungen der Schaltungsausführungen wird hingewiesen.

Das erfindungsgemäße Verfahren gestattet es, eine elektronische Programmzeitschrift in dem Empfangsgerät herzustellen, zu aktualisieren und damit dem Benutzer die Möglichkeit einzuräumen, sich über das aktuelle Programmangebot der Sendeanstalten zu informieren, wobei die Programmangebote, die aus den Videotextseiten oder sonstigen Programminformationen Programmdaten erstellt werden und den Sendeanstalten zugeordnet sind, nach unterschiedlichen Kriterien geordnet werden können. Das einfachste Kriterium ist die Auflistung der gegenwärtig empfangbaren Programme der einzelnen Sendeanstalten. Ein weiteres Kriterium kann das Aufrufen von Programmen sein, die in der nächsten Stunde angeboten werden, und zwar von allen Sendern, die am Empfangsort empfangbar sind, ohne daß dabei von einem Kanal auf den anderen umgeschaltet werden muß, um Videotextseiten, beispielsweise bei Fernsehübertragungen, visuell auswerten oder auf solche Programmübersichtstafeln warten zu müssen. Der Benutzer erhält also automatisch stets eine aktualisierte Übersicht über die Programmangebote. Die Auflistung kann je nach Umfang des Programmzeitschriftspeichers auch auf die Übersicht eines Wochenprogramms oder sogar über einen monatlichen Zeitraum und länger aktualisiert werden. Dies hängt jeweils davon ab, in welchem Umfang die Programmdaten zeitabhängig von den Sendeanstalten mit ausgestrahlt werden. Dies gilt gleichermaßen auch für Programmdaten, die im Tonrundfunk mit übertragen werden und Ankündigungsdaten für Programme beinhalten. Für die mit den Programmdaten übersandten Abstrahlungsdaten, nämlich Tag und Uhrzeit für Start und Ende, können solche Daten selbstverständlich auch zur Aufzeichnungssteuerung verwendet werden. Das gleiche gilt auch für die Übernahme von VPS- oder RDS-Daten zur Aufzeichnungs- oder Darbietungsaufsteuerung des Gerätes. Als weitere Anzeigekriterien können auch Programminhalte dienen, soweit die entsprechenden Kennungen mit übertragen werden, z.B. ob es sich um eine Musiksendung, eine Wissenschaftssendung, eine Sportsendung, ein Unterhaltungsprogramm, ein Nachrichtenprogramm und dergleichen handelt. Die entsprechenden Kennungen sind sowohl für den Fernsehrundfunk als auch für den Tonrundfunk verabredet und werden von den Sendeanstalten teilweise schon jetzt mit übertragen. Auf diese Weise ist es möglich, anhand der empfangenen Programmdaten eine solche Zuordnung zu bestimmten Kriterien durch eine Programmsteuerung zu bewirken. Darüber hinaus ermöglicht die Erfindung aber auch eine wahlfreie Zuordnung, indem über die Bedienungstastatur beispielsweise "Musiksendung" eingegeben wird. Das Computerprogramm, das entsprechend auszulegen ist, stellt dabei alle in der Programmzeitschrift aufgelisteten Programme nach diesen Kriterien zusammen, dies kann vor dem Speichern oder beim Auslesen der Daten aus der Programmzeitschriftspeicher erfolgen, soweit diese z.B. als Musiksendungen charakterisiert sind und/oder selektiert werden können. Die Liste der Sortierkriterien läßt sich beliebig verlängern. Die angegebenen Kriterien sollen hier nur beispielhaft als eine Möglichkeit angesehen werden. Es versteht sich dabei von selbst, daß das Sortierprogramm, das in der Prozessorsteuerung implementiert sein muß, diesen Anforderungen jeweils gerecht wird.

Die Erfindung gibt darüber hinaus erstmals ein völlig neues Abstimmsystem an, bei dem die Abstimmung nämlich nicht mehr, wie nach dem Stand der Technik bekannt, auf einen bestimmten Kanal erfolgt, sondern abhängig von der Programmauswahl erfolgen kann. Für Programm steht hier der jeweilige zeitlich begrenzte einzelne Sendebeitrag. Der Benutzer wählt nur das Programm an, das er sehen bzw. hören will. Dies wird sofort eingeschaltet, wenn das Programm ausgesendet wird. Im anderen Fall wird die Voreinstellung registriert und automatisch auf das Programm zum Einschaltzeitpunkt in den Programmdaten eingeschaltet. Eine Verriegelungsschaltung kann dabei vorgesehen sein, so daß bei Betrachten eines laufenden Programms eine Umschaltung auf ein voreingestelltes Programm nicht erfolgt. Handelt es sich allerdings um eine mit Vorrang darzustellende oder aufzuzeichnende Sendung, dann wird auch eine laufende Darstellung oder Aufzeichnung unterbrochen und die mit Vorrang versehenen Programmdaten zur Abstimmung herangezogen und das entsprechende Programm dargestellt oder aufgezeichnet. Darüber hinaus bietet die Erfindung aber auch eine einfache Kindersicherung in der Weise, daß Programme, die z.B. jugendgefährdend sind, auf einfache Weise gesperrt werden können. Der Benutzer kann also im voraus schon über einen bestimmten Zeitraum alle Programme markieren, die beispielsweise von seinen Kindern nicht gesehen werden sollen. Die Markierung dieser Programme in der Darstellung bewirkt, daß eine Abstimmung auf diese Programme für denjenigen nicht möglich ist, der den Blockiercode nicht kennt. Nur der Benutzer, der den Blockiercode oder den notwendigen Aufhebungscode eingibt, kann die Freischaltung der markierten Programme bewirken. Die Blockierung kann blockweise, also durch Zusammenfassen mehrerer Programme,erfolgen oder aber auch bezüglich jedes einzelnen Programms, das in der Folge als nächstes aufgezeichnet oder dargestellt werden soll. Es versteht sich von selbst, daß ein Gerät, das alle diese Funktionen gemäß den einzelnen Verfahrensschritten erfüllt, mit einer Prozessorsteuerung versehen sein muß, die die erforderliche Rechner- und Speicherleistung aufweist. Daß dabei die Programme der Prozessorsteuerung so zu entwickeln sind, daß die jeweiligen Funktionen, die in den Verfahrensschritten angegeben sind, realisiert werden können, ist dabei ebenfalls selbstverständlich.

Eine Schaltung zur Realisierung der Verfahren bedingt in jedem Fall immer, daß die empfangenen und decodierten Daten überprüft werden, ob es sich dabei um Programmdaten handelt, die entweder Videotextseiten entnommen oder als Einzeldaten in Vorausschau auf eine zukünftige Sendung vom Sender abgestrahlt werden. Dies gilt auch für solche Programmdaten, die Fernsehprogramme oder Tonrundfunkprogramme beinhalten. Das erfindungsgemäße Verfahren und die Schaltungsanordnung für die Auswertung sind in beiden Fällen die gleichen. Im Falle, daß der Programmträger ein CD-Plattenspieler, z.B. ein Mehrfachplattenspeicher, ist, werden die Aufzeichnungsdaten, die den einzelnen aufgezeichneten Stücken oder Filmen oder am Anfang der einzelnen CD's den Programmen vorangestellt sind, als Programmdaten angesehen und in gleicher Weise aufgelistet, so daß auch hierüber eine kontinuierliche Auswahl von aufgezeichneten Bild- oder Tondaten mittels der Programmzeitschrift möglich ist. Im Falle des CD-Plattenspielers wird dabei keine Abstimmschaltung gesteuert sondern in Abhängigkeit der Programmdaten die Platte und die Spur vom Laufwerk angesteuert, die dieser Programminformation entspricht.

Im Fall, daß neben den Kurzbezeichnungen der einzelnen Programme auch detaillierte Programmbeschreibungen empfangen und abgespeichert sind, dienen die Programmdaten zugleich auch dazu, um die Adressen des Speichers aufrufen zu können, in denen die ergänzenden Erläuterungen gespeichert sind, so daß sich der Benutzer über den Programminhalt der jeweiligen Darbietung, z.B. einer Fernsehshow oder eines Film oder eines Musikstückes, schriftbildlich informieren kann, bevor er eine Auswahl trifft, um das betreffende Programm darstellen zu lassen oder aufzuzeichnen. Auch dies ist über die elektronische Programmzeitschrift möglich.

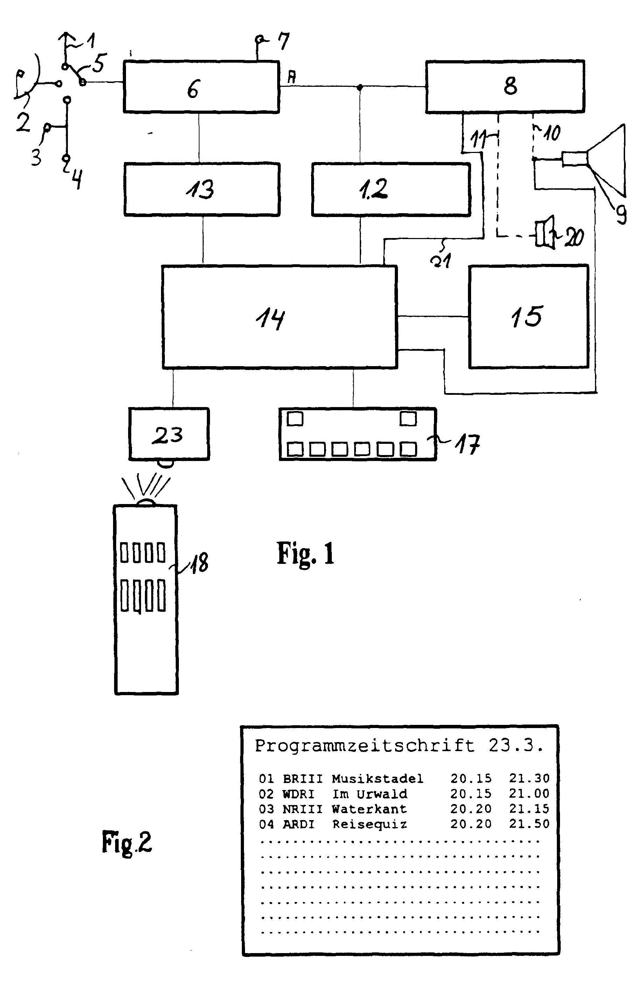

Die Erfindung wird nachfolgend anhand eines Ausführungsbeispiels eines Empfängers gemäß Fig. 1 und einer möglichen Darstellung einer elektronischen Programmzeitschrift auf dem Bildschirm eines Fernsehgerätes in Fig. 2 ergänzend erläutert.

In dem Blockschaltbild in Fig. 1 ist schematisch ein Empfänger mit einer Auswerteschaltung dargestellt, die die Schaltungsanordnung zur Durchführung des Verfahrens verkörpert. In dem Blockschaltbild ist mit dem Bezugszeichen 1 eine Antenne für den Empfang terrestrischer Fernseh- und/oder Tonrundfunksignale dargestellt, mit dem Bezugszeichen 2 eine Satellitenempfangsanlage, mit dem Bezugszeichen 3 ein Anschluß an ein Kabelverteilnetz und mit Anschluß 4 eine Einspeisung von Programmen von einem Massenprogrammspeicher, z.B. einem Musikcomputer mit einer Vielzahl von CDs, deren abgegriffene Signale mit einem Träger moduliert übertragen werden. Die einzelnen Anschlüsse sind über einen Wahlschalter 5 an die Empfängerschaltung 6 ankoppelbar. Die Empfängerschaltung 6 besteht aus einem Tuner, der auf die jeweiligen Sendefrequenzen abstimmbar ist, und einem ZF-Verstärker sowie einem Demodulator. Am Ausgang A liegt das demodulierte Signal an, das den weiteren Signalverarbeitungsstufen 8 in dem Gerät zugeführt wird. Im Fall, daß es sich dabei um ein Fernsehempfangsgerät handelt, ist dieses die Bild- und Tonsignalverarbeitungsschaltung, die über die Ausgänge 10 und 11, die gestrichelt gezeichnet sind, der Bildröhre 9 bzw. dem Lautsprecher 20 zugeführt wird. Die Signalbeeinflussung erfolgt dabei von der Prozessorsteuereinheit 14 über die Steuerleitung 21 in Abhängigkeit von eingegebenen Funktionsstellwerten, die zum einen durch die Ortstastatur 17 am Gerät selbst und zum anderen durch den Fernbedienungsgeber eingegeben werden können.

Im Fall, daß es sich bei dem Gerät um ein Gerät zum Empfang von Rundfunksignalen, z.B. RDS-Signalen oder DSR-Signalen oder Musicam-Signalen, handelt, besteht die Signalverarbeitungsschaltung 8 ausschließlich aus Tonsignalverarbeitungsstufen, wobei der Ton über mehrere Lautsprecher 20 abgestrahlt wird. Die Möglichkeiten der Aufzeichnung der empfangenen Signale sind hier der Einfachheit halber nicht dargestellt. Ein mit der Auswerteschaltung bestückter Rundfunkempfänger weist entweder ein größeres Display, z. B. ein Flachdisplay, oder eine kleine Bildröhre in dem Gerät oder einen Anschluß für ein Fernsehempfangsgerät auf, auf dessen Bildschirm die Daten, die nach dem erfindungsgemäßen Verfahren zusammengestellt werden, angezeigt werden. Aus diesem Grunde ist die Leitung 10 gestrichelt dargestellt, während die Leitung 22 als durchgehende Linie dargestellt ist. Die Auswerteschaltung nach der Erfindung weist im Ausführungsbeispiel einen Videotextdecoder 12 bzw. einen Decoder auf, der die Programmdaten aus den angebotenen Datenpaketen selektiert. Handelt es sich um Fernsehsignale, so sind dies Videotextseiten, die bei digitaler Übertragung von Fernsehsignalen im Servicekanal ebenfalls übersandt werden können, ebenso wie zusätzlich zu den Video- und Tonsignalen bei der Signalübertragung bei gegenwärtigen Normen. Handelt es sich hingegen um einen reinen Rundfunkempfänger, so können die abgegriffenen Programmdaten RDS-Daten oder andere Programmdaten sein, die für eine vorausschauende Programmanzeige angeboten werden. Der Decoder 12, der diese Daten ausfiltert und mittels eines eigenen Prozessors in darstellbare Zeichen umsetzt, speichert die Seiten oder einzelne Programmdaten in einem separaten eigenen Speicher, und zwar so wie sie angeboten werden. Die Prozessorsteuerschaltung 14 bewirkt über die Abstimmsteuerschaltung 13 eine Abstimmung auf alle empfangbaren Sender, die am Aufstellungsort empfangen werden können. Dies erfolgt z.B. beim Einschalten des Gerätes durch einen Suchlauf, in dem alle empfangbaren Sender festgestellt werden. Dieser Vorgang kann diskontinuierlich zum Auffrischen der Daten im Speicher des Videotext- oder RAM-Daten-Empfängers 12 wiederholt oder aber beim Umschalten von einem Kanal auf den anderen oder beim Ausschalten des Gerätes bewerkstelligt werden. In jedem Fall werden während der Abstimmung auch die die Programmdaten enthaltenden Informationsseiten empfangen und von dem Videotextdecoder übernommen. Das Übernehmen kann auch durch Betätigung einer besonderen Übernahmetaste am Fernbedienungsgeber 18 oder der Ortsbedienung 17 ausgelöst werden. Darüber hinaus nimmt die Prozessorsteuerschaltung aufgrund eines weiteren eingeschriebenen Programms eine Neuordnung der Programmdaten, die von den Sendern empfangen werden, vor und ordnet diese nach ganz bestimmten vorgegebenen Kriterien. Dieses Kriterium kann z.B. sein, daß alle Programme, also Sendebeiträge, eines bestimmten Senders, beispielsweise ARDI, RTL für eine Woche oder einen Tag oder einen Monat geordnet dargestellt werden. Zweckmäßig ist es zunächst aber, daß die Prozessorsteuereinrichtung mit dem eingeschriebenen Programm die Programmdaten nach Uhrzeiten geordnet in Listen aneinanderfügt, so daß der Benutzer sich sofort einen Überblick darüber verschaffen kann, zu welchen Uhrzeiten an welchem Tag welche Programme von welchen Sendern ausgestrahlt werden. Die Listenlänge und die Listeninhalte hängen dabei von den jeweiligen Programmdaten ab, die von den einzelnen Sendern über einen bestimmten Zeitraum als Vorabinformationen angeboten werden. Ist eine solche Liste erstellt, so werden die Programmdaten in einem Programmzeitschriftspeicher 15 gespeichert. Diese Daten werden ständig aufgefrischt, wie dies vorher schon angegeben ist, indem durch diskontinuierliche oder kontinuierliche Suchläufe die neuen Programmdaten für die Vorabinformation zunächst vom Decoder 12 decodiert und abgespeichert werden und die Prozessorsteuerschaltung 14 nach dem eingeschriebenen Programm diese Daten als neue Daten übernimmt oder vorhandene Daten im Speicher 15 überschreibt oder im Falle, daß die Daten identisch sind, keine Überschreibung vornimmt. Zu den Daten zugeordnet sind selbstverständlich auch die Einschaltpunkte und ggf. auch die Ausschaltzeitpunkte sowie im Falle von Daten, die vom Videotextsystem kommen, die VPS-Daten, um darüber ein angeschlossenes Gerät oder das Gerät selbst bzw. die Aufzeichnung in Abhängigkeit der VPS-Daten einzuschalten und/oder auszuschalten. Diese Auswerteschaltung, wie sie hier angesprochen ist, kann selbstverständlich in völlig gleicher Bauweise auch in Videorecordern eingesetzt werden. In diesem Fall dient das angeschlossene Fernsehgerät mit der Bildröhre 9 als Sichtanzeigegerät.

Wenn die Liste der Programmbeiträge in der angesprochenen Art und Weise erstellt ist, so kann das Computerprogramm auch überwachen, welche Programmdaten überholt sind, d.h. daß durch Zeitablauf die entsprechenden Programme nicht mehr vorhanden sind. Die Liste führt also ständig aktualisierte Programmhinweise. Aus diesem Grunde erklärt sich auch, daß die Programmzeitschrift als elektronische Zeitschrift stets aktualisiert ist und bei kurzfristiger Umstellung der Programmfolgen oder der Sendestücke der Benutzer sich auch hierüber einen Überblick verschaffen kann, was anhand von wöchentlich erscheinenden gedruckten Programmzeitschriften für ihn nicht möglich ist, da die Programmzeitschriften schon anderthalb Wochen vor Beginn einer Sendung gedruckt und versendet werden. Mit der elektronischen Programmzeitschrift ist eine nachträgliche Aktualisierung möglich. Bestehen zu den einzelnen Programmangaben noch weitere textliche oder bildliche Untermauerungen, so sind diese in einem gesonderten Speicher abzuspeichem. Bei Aufruf einer Informationstaste auf dem Bedienfeld 17 oder der Fernbedienung 18 dienen die Programmdaten als Adressdaten zum Aufrufen der ergänzenden abgelegten Programmbeschreibungen, die dann auf dem Bildschirm der Bildröhre 9 ebenfalls angezeigt werden. Darüber hinaus sieht die Erfindung aber auch vor, daß nach einem anderen Steuerprogramm die Prozessorsteuerschaltung durch entsprechenden Eingabebefehl über eine Taste des Fernbedienungsgebers 18 bzw. der Ortsbedienung 17 eine Umsortierung der Daten in dem Programmzeitschriftspeicher 15 vornimmt, in der Weise, daß beispielsweise alle Programmbeiträge des Bayerischen Rundfunks BRI einer Woche, eines Tages oder eines Monats angezeigt werden. Andere Ordnungskriterien können ebenfalls eingegeben werden, z.B. die Auswahl von reinen Musiksendungen, die Auswahl von Nachrichtensendungen usw. Die entsprechenden Auswahlkriterien sind den Benutzergewohnheiten entsprechend durch das Computerprogramm anpaßbar. Zum Zwecke der Ansteuerung werden die von dem Fernbedienungsgeber 18 empfangenen Fernsteuerbefehle vom Empfänger 23 aufgearbeitet und der Prozessorsteuerschaltung 14 zugeführt.

Es ist ersichtlich, daß die angegebene Auswerteschaltung eine in sich geschlossene Einheit darstellt, die in verschiedenen unterhaltungselektronischen Geräten eingesetzt werden kann, beispielsweise in einem Fernsehempfangsgerät, das das Display als Großdisplay bereits zur Verfügung stellt und in dem in bekannter Weise Videotextseiten mit 20 oder 25 Zeilen darstellbar sind. Diese Einheit kann aber auch in einem Videorecorder vorgesehen sein. Dann werden die Daten entweder auf einem eigenen Display des Gerätes oder aber auf einem angeschlossenen Fernsehempfänger, der zur Wiedergabe der Aufzeichnungssendungen dient, angezeigt. Im Falle solcher Empfänger weist die Prozessorsteuereinheit 14 darüber hinaus nicht nur ein Programm zum Auffrischen der Programmdaten in dem Speicher 15 auf sondern ermittelt auch die zugeordneten Frequenzen zu den einzelnen Sendern bzw. Kanäle, die zugehörig zu den einzelnen Programmdaten abgespeichert werden, so daß ein völlig neues Abstimmsystem durch die Erfindung ebenfalls realisiert ist, indem nämlich nicht mehr auf Kanäle abgestimmt wird sondern daß der Benutzer anhand der Programmzeitschrift das Programm voreinstellen oder von dem gegenwärtig laufenden Programm auf ein anderes schalten kann, das seinen Wünschen entspricht, ohne daß er erst durch Kanalspringen sich einen Überblick über die aktuellen Programme verschaffen bzw. die Programmübersichtstafeln eines bestimmten Senders aufrufen muß, um zu sehen, welche Sendung gerade von diesem Sender abgestrahlt wird bzw. welches Programm gerade empfangen wird.

Die elektronische Programmzeitschrift ermöglicht also, daß durch Anwahl der einzelnen Programmzeilen, was beispielsweise durch die vorangesetzten laufenden Nummern oder durch eine Cursorführung bewirkt werden kann, die Abstimmung der Empfängerschaltung auf den jeweiligen Sender erfolgt, indem mittels des Fernbedienungsgebers 18 eine Cursorbewegung erzielt wird, und die jeweils durch den Cursor markierte Zeile übernommen wird, wodurch der Empfänger auf den Kanal oder die Frequenz abgestimmt wird, die dem Programm zugeordnet ist. Die Programmdaten, die Einschaltdaten oder Programmerläuterungsdaten oder die vorangestellte Nummer können selbstverständlich verdeckt abgespeichert sein, so daß auch ein Einschalten möglich ist, indem nur eine Programmzeile aufgerufen wird, in der die Programmdaten bzw. Teile der Programmdaten, z.B. die Beschreibung des Programms, angegeben sind. Die notwendigen Steuerdaten werden dadurch automatisch zwar mit aufgerufen, aber nicht zur Anzeige gebracht. Der entsprechenden Benutzerführung ist hier keine Grenze gesetzt. Die dargestellte Datenmenge hängt lediglich von der Darstellungsmöglichkeit auf dem Bildschirm ab.

In Fig. 2 ist beispielhaft ein Teilausschnitt einer Seite einer elektronischen Programmzeitschrift dargestellt, die auch auf dem Bildschirm z.B. eines Fernsehempfängers abgebildet ist. Es ist aus der Darstellung ersichtlich, daß in der ersten Zeile mit der laufenden Nummer 01 Bayerischer Rundfunk III. Programm angegeben ist. Der Programmbeitrag bzw. das Programm selbst weist im Titel "Musikstadel" auf. Der Start dieser Sendung ist 20.15 Uhr, sie endet planmäßig um 21.30 Uhr. Im oberen Eckenfeld des Bildschirms 19 ist darüber hinaus das Datum angezeigt. Bei dem hier ausgewählten Sortierungskriterium werden alle Sendungen einer Stunde angezeigt, wobei die Uhrzeiten im vorliegenden Fall als Startzeiten angegeben sind. In der laufenden Ordnungsnummer 02 ist das entsprechende Programm vom WDRI, in der Zeile 3 von NRIII, in der Zeile 4 von ARDI angegeben. Es ist daraus ersichtlich, daß im Fall, daß der Benutzer beispielsweise die "Waterkant-Sendung" sehen will, er nur die Kurzbezeichnung 03 eingeben muß und schon ist das entsprechende Programm angewählt. Er braucht dabei nicht zu wissen, ob der NRIII auf Speicherplatz 3 oder 25 seines Abstimmspeichers in der Abstimmeinrichtung 13 gespeichert ist. Diese Zuordnung nimmt das System automatisch vor. Dasselbe trifft auch für die Sendung "Reisequiz" zu, wenn diese aufgerufen wird. Das Aufrufen selbst kann durch die laufende Nummerneingabe erfolgen oder aber durch Cursorführung, indem der Fernbedienungsgeber 18 so ausgebildet ist, daß von einer Darstellungszeile zur nächsten Darstellungszeile fortgeschaltet wird, wenn auf dem Fernbedienungsgeber ein entsprechender Funktionssteller betätigt wird. Durch Eingabe eines weiteren Steuerbefehls werden entsprechende Programmdaten übernommen und, falls die Vorgabezeit mit der Ist-Zeit übereinstimmt bzw. die laufende Sendung läuft, das Programm automatisch aufgeschaltet. Es kann deshalb auch ein Sortierungsprogramm vorgesehen werden, das nur die laufenden Sendungen anzeigt und beispielsweise noch Restlaufzeiten angibt oder aber auch schon abgespielte Zeiten und Restzeiten, um dem Benutzer eine Information darüber zu geben, ob es sich noch lohnt, die laufende Sendung bis zum Ende anzusehen oder nicht. Alle diese Auswahlkriterien können über eine Benutzerführung beispielsweise aus einem Kriterienkatalog aufgerufen werden. Die im Speicher 15 gemäß Fig. 1 abgelegten Daten werden danach sofort geordnet zur Anzeige gebracht. Es ist auch möglich, daß eine Umspeicherung in dem Speicher selbst erfolgt. Zweckmäßiger ist es jedoch, die Software so zu gestalten, daß die Umorganisation über einen Zwischenspeicher erfolgt, der entsprechend den Auswahlkriterien die Daten aus dem Speicher 15 zur selektiven Darstellung aufbereitet. So ist es möglich, einfach wieder auf eine übersichtliche Programmzeitschrift zurückzugreifen, die nach einem bestimmten Ordnungssystem im Speicher 15, dem Programmzeitschriftspeicher, abgespeichert ist.

Die vorliegende Erfindung ist nicht nur auf hochfrequent empfangene Informationen über Programmangebote eines bestimmten Zeitabschnittes beschränkt. Die Erfindung ist beispielsweise auch in Verbindung mit einem Musikcomputer mit einer Vielzahl von LCDs einsetzbar, um dem Benutzer einen Überblick über die einzelnen Programme bzw. aufgezeichneten Musik- oder auch Spielfilme vermitteln zu können, damit er eine Auswahl aus dem Angebot treffen kann. Die einzelnen Daten, die dem Programm zugeordnet sind, sind in gleicher Weise abgespeichert wie in der Programmzeitschriftenübersicht, und zwar im Speicher 15. Die Daten können dann, wenn sie nicht mit einem HF-Träger moduliert sind, direkt in die Signalverarbeitungsschaltungen hinter dem Demodulator eingespeist werden. Zu diesem Zweck ist symbolisch in Fig. 1 der Anschluß 7 dargestellt.

## Patentansprüche

1. Verfahren zur Erstellung einer elektronischen Programmzeitschrift für Fernseh- und/oder Tonrundfunkprogramme in einem Gerät zum Empfang von Fernseh- und/oder Tonrundfunksignalen von verschiedenen Sendeanstalten, die Programminformationen als Programmdaten in Videotext (Fernsehtext)-Programmübersichtsseiten der eigenen Sendeanstalt und/oder anderer Sendeanstalten aussenden bzw. in Kabelnetze einspeisen und/oder Programminformationen als Vorabinformation zu Tonrundfunksendungen senden oder in Kabel netze einspeisen, und Abstimmung der Empfängerschaltung des Gerätes mit folgenden Merkmalen:
a) die empfangenen Programmdaten der Videotext (Fernsehtext)-Seiten oder der Programmvorabinformationen, die mit den Tonrundfunksignalen empfangen werden, werden mit einem Decoder decodiert und tabellarisch aufgelistet, in einem Programmzeitschriftenspeicher abgespeichert und auf einem Display angezeigt;
b) mindestens eine das jeweilige Programm charakterisierende empfangene Kennzeichnung wird ausgewertet und in die Liste den Programmdaten zugeordnet aufgenommen:
c) mit einer Prozessorschaltung werden durch ein eingeschriebenes Programm nach einem vorgegebenen Ordnungsalgorithmus alle empfangenen Programmdaten nach bestimmten vorgegebenen Abspeicherkriterien sortiert und in dem Programmzeitschriftspeicher automatisch oder nach Betätigung einer Übernahmetaste abgespeichert;
d) mit den Programmdaten werden in dem Programmzeitschriftspeicher automatisch zugeordnete Daten des Empfangskanals oder der Empfangsfrequenz des Senders erfaßt und abgespeichert, die für die Abstimmung der Empfängerschaltung auf den Programmbeitrag erforderlich sind;
e) die Erfassung der Abstimmdaten erfolgt in Abhängigkeit von der selektiven Abstimmung des Empfangsgerätes auf den entsprechenden Kanal oder die entsprechende Frequenz;
f) die Abstimmdaten werden angezeigt oder verdeckt;
g) durch Betätigen einer Aufrufvorrichtung werden die abgespeicherten Programmdaten aus dem Programmzeitschriftspeicher aufgerufen und auf dem Display seitenweise nach vorgegebenen Sortierkriterien, die von den Abspeicherkriterien abweichen können, dargestellt;
h) zur Abstimmung des Gerätes auf einen Sender wird eine Darstellungszeile der Programmdaten ausgewählt, wobei die zugeordneten Daten des Empfangskanals oder der Frequenz an die Abstimmschaltung der Empfängerschaltung geleitet werden.

2. Verfahren nach Anspruch 1, gekennzeichnet durch folgende Verfahrensschritte:
a) Die von einem Sender abgestrahlten Videotextseiten (Fernsehtextseiten) oder die Programminformationsseiten werden im Hinblick auf enthaltene Programmtafeln oder Programminformationsdaten überprüft.
b) Werden Programminformationsdaten oder -tafeln festgestellt, so werden die darin angegebenen Programmdaten übernommen.
c) Sofern es sich um Programmdaten handelt, die noch nicht eingespeichert sind, werden diese nach einem Ordnungsalgorithmus eingefügt, im Falle, daß die Programmdaten bereits eingespeichert sind, überschrieben oder unterdrückt.
d) Durch selektives Abstimmen werden die Videotextseiten (Fernsehtextseiten) oder die Programminformationen bei Tonrundfunksendungen der weiteren empfangbaren Sender in gleicher Weise untersucht und die den Programmen zugeordneten Daten nach Verfahrensschritt b geordnet und im Programmzeitschriftspeicher ebenfalls abgespeichert.
e) Die listenmäßige Erfassung der Programmdaten erfolgt über einen bestimmten Zeitraum anhand der den Programmdaten zugeordneten Sendedatumsangaben (Kalendertag, Uhrzeit), z. B. über einen Zeitraum von einer Woche.

3. Verfahren nach Anspruch 1 oder 2, dadurch gekennzeichnet, daß in der Anzeigezeile eines Programms laufende Nummern oder charakterisierende Kennzeichen den dargestellten Programmdaten den Programmzeilen voran- oder hintenangestellt werden.

4. Verfahren nach Anspruch 3, dadurch gekennzeichnet, daß die Abstimmung des Gerätes zum Empfang eines aus der elektronischen Programmzeitschrift ausgewählten Programms durch Eingabe der dem Programm zugeordneten laufenden Nummer oder des Kennzeichens oder bei einer Cursorführung durch Ansteuerung der Programmzeile mit dem Cursor und über Abgabe eines Übernahmebefehls durch Tastendruck einer Übernahmeeinrichtung erfolgt und daß das Programm zu der Zeit empfangen wird, die in der Programmanzeige als Sendezeit angegeben ist, und im Falle, daß das ausgewählte Programm bereits gesendet wird, dieses automatisch sofort dargestellt bzw. wiedergegeben wird, wobei bei Fernsehempfang die Programmzeitschrift bei Darstellung auf demselben Display ausgeblendet wird oder die Anzeige erst durch Betätigung einer Befehlstaste ausgeblendet wird.

5. Verfahren nach Anspruch 4, dadurch gekennzeichnet, daß den Programmdaten, die für einen Empfang ausgewählt worden sind, zusätzliche Einschaltdaten voreingestellt werden, die auf dem Bildschirm markiert angezeigt werden, z.B. durch "Vorwahl" oder durch Markierung oder farbliche Hinterlegung der Programmzeilen.

6. Verfahren nach Anspruch 5, dadurch gekennzeichnet, daß die Voreinstelldaten Vorrangdaten sind,
die durch Betätigung einer Vorrangeinstelleinrichtung den Programmdaten zugeordnet werden, und daß bei Programmüberschneidung oder bei Empfang einer laufenden Sendung in Abhängigkeit von den Vorrangdaten der Empfänger auf den Sender in der Abstimmschaltung umgeschaltet oder eingeschaltet wird, über den das Programm mit Vorrang abgestrahlt wird.

7. Verfahren nach Anspruch 5 oder 6, dadurch gekennzeichnet, daß die Prozessorsteuereinrichtung zur Anwahl der durch Voreinstellung ausgewählten Programmdaten oder die mit Vorrangdaten versehenen Einschaltdaten in einem weiteren Speicher kopiert oder die Einschaltdaten oder Vorrangdaten, die den Programmdaten zugeordnet sind, aus dem Programmzeitschriftspeicher abfragt und mit Istzeitdaten vergleicht und bei Übereinstimmung der Einschaltdaten mit den Istzeitdaten die Abstimmung auf das ausgewählte Programm vornimmt oder in der Abstimmschaltung diese auslöst.

8. Verfahren nach Anspruch 1 oder 7, dadurch gekennzeichnet, daß den Programmdaten Daten zur programmabhängigen Steuerung (VPS- oder RDS-Steuerung) zugeordnet sind, die sichtbar angezeigt oder verdeckt abgespeichert sind, und daß der Empfänger bei Verwendung nur einer Empfangsschaltung während des laufenden Empfangs einer Sendung oder im abgeschalteten Zustand der Wiedergabeeinrichtung laufend zumindest während eines bestimmten Zeitfensters vor dem erwarteten Programm den Sender im Hinblick auf VPS- oder RDS-Signale überwacht und mit Signalisierung des Einschaltzeitpunktes durch die Empfangsdaten auf das durch programmabhängige Steuerung gekennzeichnete Programm umschaltet bzw. den Empfang dieses einschaltet.

9. Verfahren nach Anspruch 8, dadurch gekennzeichnet, daß zwei Empfängerschaltungen von der Prozessorschaltung oder von mehreren Prozessorschaltungen angesteuert werden, wobei die zweite Empfängerschaltung der Überwachung der programmabhängigen Steuerung (VPS, RDS) dient.

10. Verfahren nach Anspruch 1, 8 oder 9, dadurch gekennzeichnet, daß im Falle der Verwendung in einem Fernsehempfangsgerät oder Hörrundfunkgerät die jeweilige dargebotene Sendung durch Auswahl eines anderen Programms aus der Programmzeitschrift oder durch Umschaltung auf einen anderen Sender zeitgesteuert vom angegebenen Sendeende oder in Abhängigkeit der programmabhängigen Steuerdaten des VPS- oder RDS-Systems beendet wird.

11. Verfahren nach Anspruch 1, 2 oder 7, dadurch gekennzeichnet, daß durch die Prozessorsteuerung im Programmzeitschriftspeicher abgespeicherte Programmdaten automatisch gelöscht werden, wenn das Programmende durch Zeitablauf oder durch programmabhängige Kennung nicht mehr empfangbar ist.

12. Verfahren nach Anspruch 1 oder 2, dadurch gekennzeichnet, daß die Videotextseiten (Fernsehtextseiten) durch Daten des Servicekanals bei digitaler Übertragung von Fernsehsignalen ersetzt sind und die Übernahme der Programmdaten in den Programmzeitschriftspeicher nach dem angegebenen Verfahren in gleicher Weise erfolgt.

13. Verfahren nach Anspruch 1 oder 2, dadurch gekennzeichnet, daß jeder Programmzeile und den darin angegebenen Daten zusätzlich Verriegelungsdaten hinzufügbar sind, und daß die Programmzeile durch vorangestellte oder eingesetzte oder angefügte Kennzeichen oder durch entsprechende Markierung oder farbliche Hinterlegung bei Eingabe eines Verriegelungssignals durch Betätigung einer Verriegelungssignaleingabeeinrichtung angezeigt wird, und daß die Verriegelung nur durch einen dem berechtigten Benutzer bekannten Zugangsschlüssel aufhebbar ist.

14. Verfahren nach Anspruch 13, dadurch gekennzeichnet, daß mittels Cursorführung und Belegtaste durch farbige Kennung oder sonstige Kennzeichen die blockierten Programme angezeigt werden, und daß im Falle eines blockierten Programms das Gerät zu der bestimmten Uhrzeit ein Einschalten des Programms blockiert bzw. das Programm überspringt.

15. Verfahren nach einem der vorhergehenden Ansprüche, dadurch gekennzeichnet, daß die Daten im Programmzeitschriftspeicher, die zur Anzeige gelangen, oder sämtliche Daten, einschließlich der verdeckten, über eine Druckerschnittstelle des Gerätes an einen Drucker bei Eingabe eines Druckersteuerbefehls über die Prozessorsteuereinrichtung ausgegeben werden.

16. Verfahren nach Anspruch 1 oder 2, dadurch gekennzeichnet, daß die Programmdaten in dem Programmzeitschriftspeicher nach wahlfreien Kriterien durch entsprechende Eingaben über eine Tastatur oder durch Benutzerführung auf den Bildschirm einer bestimmten Selektionsordnung unterzogen werden und die geordneten Daten entsprechend dem ausgewählten Ordnungsprogramm zur Anzeige gebracht werden.

17. Verfahren nach Anspruch 1 oder 2, dadurch gekennzeichnet, daß die Daten im Programmzeitschrift-speicher über eine Schnittstelle an einem anschließbaren geräteinternen oder externen Rechner durch Eingabe eines Übergabebefehls übertragen werden, der längere Listen von Programmdaten über längere Zeiträume verwaltet und der mit dem Prozessor der Prozessorsteuerung im Gerät korrespondiert, in der Weise, daß die im Programmzeitschriftspeicher abgespeicherten Programmdaten aktualisiert werden.

18. Verfahren nach Anspruch 1 oder 2, dadurch gekennzeichnet, daß der Programmzeitschriftspeicher ein mit dem Gerät verbindbarer Speicher ist, der an jedes Gerät mit gleicher Schnittstelle zum Programmieren des Gerätes anschließbar ist, wobei die Daten im überschreibbaren Programmzeitschriftspeicher im anderen Gerät aktualisiert werden oder dieser gegen Überschreiben von neuen Daten gesperrt werden kann.

19. Verfahren nach Anspruch 1 oder 18, dadurch gekennzeichnet, daß die Daten im Programmzeitschriften-Speicher zyklisch mindestens einmal an einem Tag oder ständig aufgefrischt werden und daß neu hinzugetretene, aus den Videotextseiten oder Programminformationsseiten übernommene neue Daten ergänzt und bestehende Daten nicht erneuert oder überschrieben werden.

20. Verfahren nach Anspruch 1 oder 19, dadurch gekennzeichnet, daß bei Ausschalten des Gerätes oder bei Umschalten des Gerätes aus dem normalen Betriebszustand in den Standby-Betrieb oder im Standby-Betrieb die Daten im Programmzeitschriftspeicher aufgefrischt, erneuert oder ergänzt werden, und daß das Gerät verzögert abgeschaltet oder verzögert in den Standby-Betrieb während der Aktualisierung der Daten im Programmzeitschriftspeicher umgeschaltet wird, wobei die Verzögerung der benötigten Auswertzeit zur Aktualisierung der Programmdaten entspricht, oder daß ein Auffrischen der Daten während des Standby-Betriebes ständig erfolgt.

21. Verfahren nach Anspruch 20, dadurch gekennzeichnet, daß während des Auffrischens der Daten mindestens die Schaltungskomponenten des Gerätes in Funktion bleiben, die hierfür erforderlich sind, während das Anzeigedisplay ausgeschaltet wird.

22. Verfahren nach Anspruch 1 oder 2,dadurch gekennzeichnet, daß die Daten aus dem Programmzeitschriftspeicher in ein laufendes auf dem Display dargestelltes Fernsehbild eingeblendet oder in einem ausgewählten Teilbereich des Displays angezeigt werden.

23. Verfahren nach einem der Ansprüche 1, 2 oder 16,
dadurch gekennzeichnet, daß durch Aufrufen eines bestimmten Sortierprogramms die Programmdaten aus dem Programmzeitschriftspeicher umsortiert zur Anzeige gebracht werden, derart, daß bei Aufruf laufende Programme oder in einem nächsten Stundenfenster oder im Tagesfenster empfangbare Programme angezeigt werden.

24. Verfahren nach Anspruch 1 oder 2, dadurch gekennzeichnet, daß die Programmdaten nach Programmarten und/oder Programminhalten zusätzlich geordnet werden und bei Aufruf der Programmdaten nach Programmarten und -inhalten, wie Sportprogramme, Wissenschaftsprogramme, Musikprogramme, Unterhaltungsprogramme und Nachrichtenprogramme sowie andere Programmordnungskriterien, geordnet aufrufbar sind und angezeigt werden.

25. Verfahren nach Anspruch 1 oder 2, dadurch gekennzeichnet, daß die Programmdaten in dem Programmzeitschriftenspeicher Adressen zum Aufrufen ausführlicher Programmdarstellungen sind, die in einem anderen Speicher abgelegt sind, und daß durch Auslösen einer Umblätterfunktion die ausführlichen Programmdarstellungen aufrufbar sind.

26. Verfahren nach Anspruch 20 oder 21, dadurch gekennzeichnet, daß Programme, die nach Themengebieten geordnet sind, durch Eingabe von Blokkiersignalen für den Empfang gesperrt und durch Eingabe eines Aufhebungssignals freigegeben werden.

27. Verfahren nach Anspruch 1 oder 2, dadurch gekennzeichnet, daß bei Einschalten des Gerätes aus dem Aus-Zustand in den Standby-Betrieb oder in den normalen Betriebszustand das Gerät alle empfangbaren Sender nach Programmdaten abfragt und die Prozessorsteuerung eine Aktualisierung der Programmdaten im Programmzeitschriftspeicher vornimmt.

28. Verfahren nach Anspruch 1 oder 2, dadurch gekennzeichnet, daß die Programmdaten mindestens folgende Codierungen oder mindestens einige davon enthalten, die insgesamt oder selektiert im Programmzeitschriftspeicher abspeicherbar sind:
- Bezeichnung des Programms
- Art des Programms
- Sendeanstalt (Kurzbezeichnung)
- Kurzbezeichnung des Senders, z.B. BR1
- VPS-Aktivierung (Ja / Nein)
- RDS-Aktivierung (Ja/Nein)
- Programmanfangszeiten
- Programmendzeiten
- Programmklassifizierungsdaten (Musik, Unterhaltung, Nachrichten)
- Radioaktivierungsdaten, um in Abhängigkeit von Kennsignalen, die mit der Tonrundfunksendung übertragen werden, die Aufzeichnung oder Darstellung zu steuern, wenn es sich um entsprechend codierte Sendungen handelt
- Programmbeschreibungsdaten.

29. Verfahren nach Anspruch 1 oder 2, dadurch gekennzeichnet, daß es mit Verfahren herkömmlicher Programmanwahl in einem Gerät kombiniert ist, in der Weise, daß entweder die herkömmliche Programmanwahl oder die Programmanwahl oder die Anzeige der Programme nach dem angegebenen Verfahren zum Betreiben des Gerätes herangezogen wird.

30. Verfahren nach einem der vorhergehenden Ansprüche, gekennzeichnet durch die Verwendung in Fernsehempfangsgeräten oder in Fernseh/ Rundfunk-Kombinationsgeräten oder in Bild- und/oder Tonaufzeichnungsgeräten, sämtliche Geräte für den Empfang von analogen und/oder digital übertragenen Sendungen in mobiler oder stationärer Ausführung oder in Verbindung mit Geräten, die eine Vielzahl von Programmen gespeichert enthalten, wie CD-Player.

31. Verfahren nach einem der vorhergehenden Ansprüche, dadurch gekennzeichnet, daß die Programmdaten auf einer CD gespeichert und hiervon abrufbar sind, daß sie in Form einer Programmzeitschrift aufgelistet sind, und daß die in dem Programmzeitschriftspeicher gespeicherten Programmdaten über die Prozessorsteuerung an die Anzeige ausgegeben werden, wobei die Anzeige als Display Bestandteil des Gerätes oder eines angeschlossenen Anzeigegerätes ist.

32. Schaltungsanordnung zur Durchführung des Verfahrens nach einem der vorhergehenden Ansprüche, dadurch gekennzeichnet, daß in einem Empfangsgerät eine Empfängerschaltung (6) mit einem Tuner, ZF-Verstärker und Demodulator, ein Videotextdecoder (12) oder ein Decoder für mit dem Tonrundfunk übertragenen Programminformationen in einem bestimmten zukünftigen Zeitabschnitt abgestrahlter Programme enthalten sind, daß ein erster Speicher zum Speichem der in den übertragenen Seiten enthaltenen Programmdaten vorhanden ist, daß eine Prozessorsteuerung mit einem Mikroprozessor vorhanden ist, der den Programmdaten automatish Daten des Empfangskanals als der Empfangsfrequenz des Senders zuordnet und abspeichert, die für die Abstimmung der Empfängerschaltung auf den Programmbeitrag erforderlich sind und nach eingeschriebenem Programm die Programmdaten aus dem ersten Speicher ausliest und diese gemeinsam mit den Abstimmdaten nach einem vorgegebenen Ordnungsalgorithmus listenmäßig in einem Programmzeitschriftspeicher (15) aufrufbar speichert, und daß durch Eingabe eines Anzeigebefehls durch Betätigung von entsprechenden Einstellelementen an der Ortsbedienung (17) am Gerät oder einer Fembedienung (18) die im Programmzeitschriftspeicher (15) abgelegten Programmdaten entsprechend der Darstellungsmöglichkeit auf dem Display (9) seitenweise an eine Steuerung eines Displays ausgebbar sind, und daß das Display (9) die bereitgestellten Programminformationen seitenweise anzeigt, daß eine Auswahleinrichtung zur Anwahl einer Programmdatenzeile vorgesehen ist, und daß die Empfängerschaltung des Gerätes nach Auswahl der Programmdaten automatisch zur Abstimmung des Empfangs die Kanaldaten und/oder Frequenzdaten aus dem Programmzeitschriftspeicher (15) erhält.

33. Schaltungsanordnung nach Anspruch 32, dadurch gekennzeichnet, daß das Display Bestandteil des Gerätes oder Bestandteil eines an das die Auswertung vornehmenden Gerätes mit Durchführungsschaltungsanordnung angeschlossenen Anzeigegerätes ist.

34. Schaltungsanordnung nach Anspruch 33, dadurch gekennzeichnet, daß die Durchführungsschaltungsanordnung Bestandteil eines Videorecorders ist, mit dem ein Fernsehempfänger oder Monitor verbunden ist, und die im Programmzeitschriftspeicher abgespeicherten und über einen Bus empfangbaren Programmdaten auf dem Bildschirm bzw. einem Display anzeigt.

35. Schaltungsanordnung nach Anspruch 33 oder 34, dadurch gekennzeichnet, daß die Durchführungsschaltungsanordnung Bestandteil eines Fernsehempfängers oder Videorecorders zum Empfang von VPS-Signalen oder Rundfunkempfängers zum Empfang von RDS-Signalen oder sonstigen mit dem Programm von einer Sendeanstalt abgestrahlten Programmdaten ist, und daß das Display in dem Rundfunkempfänger vorhanden ist oder einen Anschluß an ein Fernsehgerät aufweist, auf dessen Bildschirm die Programmzeitschrift darstellbar ist.

36. Schaltungsanordnung nach Anspruch 34 oder 35, dadurch gekennzeichnet, daß zwischen dem Anzeigegerät und dem Auswertegerät ein bidirektionaler Bus geschaltet ist, über den Befehle von dem Anzeigegerät oder von einer Fernbedienung erhaltene Befehle zur Steuerung der Prozessorsteuerung im Auswertegerät eingebbar sind, um eine Anzeige der Programmdaten nach bestimmten Auswahlkriterien oder zur Auswahl von Programmdaten für die Wiedergabe oder Aufzeichnung durchzusteuern.

37. Schaltungsanordnung nach einem der Ansprüche 32 bis 36, dadurch gekennzeichnet, daß im Bedienfeld des Auswertungsgerätes oder auf dem Fernbedienungsgeber zusätzliche Funktionstasten oder Stellglieder vorhanden sind, und daß bei deren Betätigung entsprechend den im Prozessor der Prozessorsteuerung eingegebenen bestimmten Programme die Daten im Programmzeitschriftspeicher nach bestimmten Auswertekriterien zur Anzeige gebracht werden.

38. Schaltungsanordnung nach einem der Ansprüche 32 bis 37, dadurch gekennzeichnet, daß die Prozessorsteuerung eine Abstimmschaltung für einen automatischen Suchlauf steuert und die im automatischen Suchlauf festgestellten Sender mit den bei dem Empfang dieser Sender erhaltenen Programmdaten, die dem Sender oder fremden Sendern zugeordnet sind, jedoch von derselben Sendeanstalt ausgestrahlt werden, abspeichert oder die Adresse zum Zugriff auf den Abstimmspeicher abspeichert, unter welcher Adresse der aufgefundene Sender aufrufbar ist, wobei das Prozessorprogramm die Programmdaten der fremden Sender nicht den Abstimmdaten zuordnet.

39. Schaltungsanordnung nach Anspruch 38, dadurch gekennzeichnet, daß in der Abstimmschaltung ein Speicher mit einer Sendertabelle enthalten ist, und daß die Prozessorsteuerung anhand der empfangenen Programmdaten eine Zuordnung zu den Sendern vornimmt und entsprechend die Programmdaten unter Zuordnung zu der entsprechenden Sendeanstalt im Programmzeitschriftspeicher abspeichert.

40. Schaltungsanordnung nach Anspruch 32, dadurch gekennzeichnet, daß über die Eingabetastatur durch Eingabe der laufenden Nummern in der Programmzeitschrift, die auf dem Display angezeigt wird, die Empfängerschaltung durch die Übernahme der Programmdaten auf den ausgewählten Sender abstimmt und das Programm gleichzeitig oder im Falle einer Voreinstellung zum Zeitpunkt des den Programmdaten zugeordneten Einschaltzeitpunktes einschaltet bzw. das Programm aufzeichnet.

41. Schaltungsanordnung nach Anspruch 32 oder 40,
dadurch gekennzeichnet, daß die Empfängerschaltung einen VPS-Decoder aufweist, und daß die Prozessorschaltung die VPS-Daten den Programmdaten zuordnet und in Abhängigkeit von den VPS-Daten das Gerät zeitsynchron oder während eines definierten Zeiffensters auch die Empfangsschaltung auf Lauerstellung einschaltet, und die Aufschaltung des Programmempfangs bzw. die Aufschaltung auf die Aufzeichnung erst dann erfolgt, wenn das Einschaltsignal der VPS-codierten Sendung anliegt.

42. Schaltungsanordnung nach Anspruch 32, dadurch gekennzeichnet, daß die Prozessorsteuerung nach einem Programm die angegebene Sendezeit in der Programmzeitschrift auswertet und in Abhängigkeit davon die Steuerung der Abstimmschaltung auf den Sender durchführt, unter welchem das Programm empfangbar ist.

43. Schaltungsanordnung nach Anspruch 32 in Verbindung mit einem Fernsehempfangsgerät, dadurch gekennzeichnet, daß bei Einschalten eines laufenden Programms eine Steuerung die Ausblendung der Programmzeitschrift auf dem Display automatisch auslöst und die empfangenen Bildinformationen des laufenden Programms anzeigt.

44. Schaltungsanordnung nach Anspruch 32, 33 oder 34, dadurch gekennzeichnet, daß das Anzeigedisplay ein Farbanzeigedisplay ist, und daß voreingestellte Programmdaten für eine Wiedergabe oder Aufzeichnung bei Auswahl durch einen Auswahlbefehl oder Vorrangbefehl farblich hinterlegt sind, wobei die Vorauswahl oder der Vorrang mit unterschiedlichen Farben hinterlegt sind oder die schriftbildliche Darstellung des Programms in anderen Farben erscheint, und daß die Farbkennung als zusätzliche Daten in dem Programmzeitschriftspeicher auswertbar mit abgespeichert sind.

45. Schaltungsanordnung nach Anspruch 32, dadurch gekennzeichnet, daß die Auswerteschaltung eine separate Empfängerschaltung aufweist und daß die zweite Empfängerschaltung zum Empfang laufender Sendungen oder zum Empfang der über die Programmauswahl abgestimmten Sender vorgesehen ist.

46. Schaltungsanordnung nach Anspruch 32, dadurch gekennzeichnet, daß in dem Gerät eine Zeitkomparatorschaltung vorgesehen ist, in welchem die Ist-Zeit mit der vorgegebenen Einschaltzeit und/oder Ausschaltzeit verglichen wird, und daß in Abhängigkeit von der den Programmdaten zugeordneten Einschalt- und/oder Ausschaltzeiten die Darstellung oder die Aufzeichnung des Programms eingeschaltet und/oder abgeschaltet wird.

47. Schaltungsanordnung nach Anspruch 32, dadurch gekennzeichnet, daß die Empfängerschaltung einen Demodulator für digital übertragene Daten aufweist, und daß die im Servicekanal übertragenen Daten, soweit sie Programmdaten beinhalten, von der Prozessorsteuerung ausgewertet werden.

48. Schaltungsanordnung nach Anspruch 32, dadurch gekennzeichnet, daß die Empfängerschaltung eine solche für den Empfang von Signalen, die terrestrisch, über Satellit oder über Kanäle verteilt angeboten werden ist.

49. Schaltungsanordnung nach Anspruch 32, dadurch gekennzeichnet, daß das Gerät eine Druckerschnittstelle aufweist.

50. Schaltungsanordnung nach Anspruch 32, dadurch gekennzeichnet, daß das Gerät eine Schnittstelle für einen anschließbaren Rechner aufweist und daß der Prozessor die in dem Programmzeitschriftspeicher abgespeicherten Daten oder in diesem abspeicherbaren Daten über einen längeren Zeitraum durch ein Übertragungsprogramm an den angeschlossenen Rechner überträgt.

51. Schaltungsanordnung zur Durchführung nach Anspruch 32, dadurch gekennzeichnet, daß ein Generator in dem Gerät vorgesehen ist, der von der Prozessorsteuereinrichtung gesteuert den Suchlauf durch alle Empfangsbereiche kontinuierlich oder diskontinuierlich oder zu bestimmten Zeiten oder in Abhängigkeit der Betriebsschaltung des Gerätes (Standby) Vollbetrieb Einschalten/Ausschalten bewirkt, und daß die dabei empfangenen Programmdaten ausgewertet und in dem Programmzeitschriftspeicher eingetragen oder die dort eingetragenen Daten überschrieben oder bereits gespeicherten Daten nicht übernommen werden.

52. Schaltungsanordnung nach Anspruch 32, dadurch gekennzeichnet, daß in dem Gerät eine Überblendschaltung zum Überblenden der Programmzeitschrift in ein dargestelltes Fernsehbild einer laufenden empfangbaren Sendung vorgesehen ist.

53. Schaltungsanordnung nach Anspruch 32, dadurch gekennzeichnet, daß ein Umschalter im Bedienungsfeld vorgesehen ist, der die Umschaltung des Betriebes der Empfängerschaltung auf Kanalwahl oder auf Programmwahl bewirkt.

54. Schaltungsanordnung nach Anspruch 32, dadurch gekennzeichnet, daß der Programmzeitschriftspeicher ein löschbarer Schreib/Lese-Speicher (RAM, EEPROM) ist.

55. Schaltungsanordnung nach Anspruch 54, dadurch gekennzeichnet, daß der Schreib/Lese-Speicher ein in das Gerät einschiebbarer Wechselspeicher ist.

56. Schaltungsanordnung nach Anspruch 55, dadurch gekennzeichnet, daß der Wechselspeicher eine Chipkarte mit Prozessor und Speicher ist.

## Claims

1. Method for the setting-up of an electronic program journal for television and/or sound radio programs in an apparatus for the reception of television and/or sound radio from different transmitting institutions, which emit program information as program data in video text (television text) program survey pages of the own transmitting institution and/or other transmitting institutions or feed these into cable networks and/or send program information as preliminary information to sound radio transmissions or feed these into cable networks and tuning of the receiver circuit of the apparatus, with the following features:
a) the received program data of the video text (television text) pages or the preliminary program information received with the sound radio signals are decoded by a decoder and listed tabularly, stored in a program journal storage device and indicated on a display,
b) at least one received identification characterising the respective program is evaluated and taken up in the list in association with the program data,
c) all received program data are sorted according to certain preset filing criteria by a processor circuit with an inscribed program according to a preset ordering algorithm and filed in the program journal storage device either automatically or after actuation of a take-over key,
d) data of the reception channel or the reception frequency of the transmitter which are necessary for the tuning of the receiver circuit to the program contribution, are automatically associated in the program journal storage device and seized and filed together with the program data,
e) the seizing of the tuning data takes place in dependence on the selective tuning of the receiving apparatus to the corresponding channel or the corresponding frequency,
f) the tuning data are indicated or concealed,
g) the filed program data are called up out of the program journal storage device by actuation of a call-up device and represented on the display page by page according to preset sorting criteria which can differ from the filing criteria, and
h) a line of the representation of the data is selected for the tuning of the apparatus to a transmitter, for which the associated data of the reception channel or of the frequency are led to the tuning circuit of the receiver circuit.

2. Method according to claim 1, characterised by the following method steps:
a) The video text pages (television text pages) or the program information pages radiated by a transmitter are checked in respect of contained program tables or program information data;
b) if program information data or tables are ascertained, then the program data indicated therein are taken over;
c) in so far as program data are concerned, which have not yet been entered into storage, these are inserted according to an ordering algorithm and, in the case that the program data have already been entered into storage, these are written over or suppressed;
d) the video text pages (television text pages) or the program information in the case of sound radio transmissions of the further receivable transmitters are examined in like manner by selective tuning and the data associated with the programs are ordered according to method step (b) and likewise filed in the program journal storage device;
e) the listwise seizing of the program data takes place over a certain time span by reference to the transmission date statements (calender day, check time) associated with the program data, for example over a time span of one week.

3. Method according to claim 1 or 2, characterised in that serial numbers in the display line of a program or characterising identifications in the represented program data are set at the front or rear in the program lines.

4. Method according to claim 3, characterised in that the tuning of the apparatus for the reception of a program selected from the electronic program journal takes place through input of the serial number associated with the program or of the identification or, in the case of a cursor control, by selective driving of the program line of the cursor and by way of issue of a take-over command by key pressure of a take-over equipment and that the program is received at the time which is indicated as transmission time and, in the case that the selected program is already being transmitted, this is automatically presented or reproduced at once, wherein the program journal in the case of television reception is cut out in the case of representation on the same display or the indication is cut out only by actuation of a command key.

5. Method according to claim 4, characterised in that additional switch-on data, which indicated on the picture screen marked for example by "preselection" or by marking or coloured backing of the program lines, are preset for the program data which have been selected for a reception.

6. Method according to claim 5, characterised in that the preset data are priority data which are associated with the program data by actuation of a priority-setting equipment and that, in the case of program overlap or reception of a current transmission, the receiver is switched over or on in the tuning circuit in dependence on the priority date to the transmitter, by way of which the program with priority is radiated.

7. Method according to claim 5 or 6, characterised in that the processor control equipment for the selection copies the program data selected by presetting or the switch-on data, which are provided with priority data, into a further storage device, or interrogates the switch-on data or the priority data, which are associated with the program data,from the the program journal storage device and compares them with actual time data and, in the case of agreement of the switch-on data with the actual time data, undertakes the tuning to the selected program or initiates this in the tuning circuit.

8. Method according to claim 1 or 7, characterised in that the program data are associated with data for the program-dependent control (VPS-control or RDS-control), which are visibly indicated or filed in concealed manner, and that the receiver - with the use of only one receiving circuit during the current reception of a transmission or in the switched-off state of the reproduction equipment - currently monitors the transmitter in respect of VPS-signals or RDS-signals at least during a certain time window before the expected program and, by signalling of the instant of switching-on by the received data, switches over to the program characterised by the program-dependent control or switches on the reception thereof.

9. Method according to claim 8, characterised in that two receiver circuits are selectively driven by processor circuit or by several processor circuits, wherein the second receiver circuit serves for the monitoring of the program-dependent control (VPS, RDS).

10. Method according to claim 1, 8 or 9, characterised in that in the case of the use in a television receiver apparatus or sound radio apparatus, the respectively offered transmission is terminated by selection of another program from the program journal or by switching over to another transmitter under time control by the indicated end of transmission or in dependence on the program-dependent control data of the VPS-system or RDS-system.

11. Method according to claim 1, 2 or 7, characterised in that program data filed in the program journal storage device by the processor control are erased automatically when the end of the program is no longer receivable due to elapse of time or due to program-dependent identification.

12. Method according to claim 1 or 2, characterised in that the video text pages (television text pages) are replaced by data of the service channel in the case of digital transmission of television signals and the take-over of the program data into the program journal storage device takes place in like manner according to the indicated method.

13. Method according to claim 1 or 2, characterised in that locking data are addable in addition to each program line and the data indicated therein and that the program line is displayed due to prefixed or inserted or added identifications or due to corresponding marking or coloured backing or input of a locking signal by actuation of a locking signal input equipment and that the locking is cancellable only by an access key known to the authorised user.

14. Method according to claim 13, characterised in that the blocked programs are indicated by means of cursor control and seizing key by coloured identification or other identifying marks and that the apparatus, in the case of a program being blocked, blocks a switching-on of the program or skips the program at the set clock time.

15. Method according to one of the preceding claims, characterised in that the data in the program journal storage device, which get to display, or all data including the concealed ones are issued by way of a printer interface of the apparatus to a printer on input of a printer control command by way of the processor control equipment.

16. Method according to claim 1 or 2, characterised in that the program data in the program journal storage device are subjected to a certain selection ordering according to freely selectable criteria by appropriate inputs by way of a keyboard or by user control on the picture screen and the ordered data are brought to display according to the selected ordering program.

17. Method according to claim 1 or 2, characterised in that the data in the program journal storage device are transmitted by way of an interface connectable to a computer by input of a transfer command, which computer is internal of the apparatus or external and which manages longer lists of program data over longer time spans and corresponds with the processor of the processor control in the apparatus in such a manner that the program data filed in the program journal storage device are updated.

18. Method according to claim 1 or 2, characterised in that the program journal storage device is a storage device which is connectable with the apparatus and with any apparatus with the same interface for the programming of the apparatus, wherein the data in the program journal storage device that can be written over are updated in the other apparatus or this can be blocked against overwriting by new data.

19. Method according to claim 1 or 18, characterised in that the data in the program journal storage device are regenerated cyclically at least once a day or constantly and that newly added new data taken over from the video text pages or program information pages are augmented and existing data are not renewed or written over.

20. Method according to claim 1 or 9, characterised in that the data in the program journal storage device are regenerated, renewed or augmented on the switching-off of the apparatus or on the switching-over of the apparatus out of the normal operating state into the stand-by operation or in stand-by operation and that the apparatus is switched off with delay or switched over with delay into the stand-by operation during the updating of the data in the program journal storage device, wherein the delay corresponds with the required evaluating time for the updating of the program data or that a regeneration of the data takes place constantly during the stand-by operation.

21. Method according to claim 20, characterised in that during the regeneration of the data, at least those circuit components of the apparatus remain in function, which are required for this purpose, whilst the indicating display is switched off.

22. Method according to claim 1 or 2, characterised in that the data from the program journal storage device are faded into a current television picture represented on the display or shown in a selected partial region of the display.

23. Method according to one of the claims 1, 2 and 16, characterised in that the program data are brought out of the program journal storage device resorted to display in such a manner by calling-up of a certain sorting program that programs running at the time of calling-up or programs receivable in a next hour window or in the day window are displayed.

24. Method according to claim 1 or 2, characterised in that the program data are ordered additionally according to program kinds and/or program contents and are callable up in ordered manner and displayed on the call-up of the program data according to program kinds and program contents, such as sports programs, science programs, music programs, entertainment programs and news programs as well as according to other program-ordering criteria.

25. Method according to claim 1 or 2, characterised in that the program data in the program journal storage device are addresses for the calling-up of detailed program representations which are filed in another storage device and that the detailed program representations can be called up by initiation of a sheet-turning function.

26. Method according to claim 20 or 21, characterised in that programs, which are ordered according to thematic fields, are blocked for the reception by the input of blocking signals and released by input of a cancellation signal.

27. Method according to claim 1 or 2, characterised in that on the switching-on of the apparatus out of the off-state into the stand-by operation or into the normal operating state, the apparatus interrogates all receivable transmitters for program data sand the processor control undertakes an updating of the program data in the program journal storage device.

28. Method according to claim 1 or 2, characterised in that the program data contain at least the following codings or at least some thereof, which are filable altogether or selectedly in the program journal storage device:
- Description of the program,
- kind of the program,
- transmitting institution (short name),
- abbreviated description of the transmitter, e.g. BR1,
- VPS-activation (yes/no),
- RDS-activation (yes/no),
- program starting times,
- program end times,
- program classifcation data (music, entertainment, news),
- radio activation data in order, in dependence on identification signals which are transmitted together with the sound radio transmission, to control the recording or reproduction when correspondingly coded transmissions are concerned, and
- program description data.

29. Method according to claim 1 or 2, characterised in that it is combined with methods of conventional program selection in an apparatus in such a manner that either the conventional program selection or the program selection or the display of the program according to the stated method is drawn upon for the operation of the apparatus.

30. Method according to one of the preceding claims, characterised by the use in television reception apparatus or in combined radio and television apparatus or in picture and/or sound recording apparatus, all apparatus for the reception of transmissions, which are transmitted in analog and/or digital form, in mobile or stationary construction or in conjunction with apparatus, which contain a plurality of stored programs, such as CD-players.

31. Method according to one of the preceding claims, characterised in that the program data are stored on a CD and can be called up therefrom, that they are listed in the form of a program journal and that the program data stored in the program journal storage device are issued to the indication by way of the processor control, wherein the indication as display is component of the apparatus or a connected indicating apparatus.

32. Circuit arrangement for the performance of the method according to one of the preceding claims, characterised in that in a receiving apparatus, a receiver circuit (6), with a tuner, intermediate frequency amplifier and demodulator, a video text decoder (12) or a decoder for program information, which is transmitted by the sound radio, of programs radiated in a certain future time portion, that a first storage device is present for the storage of the program data contained in the transmitted pages, that a processor control with a microprocessor is present, which associates automatically data of the reception channel or the reception frequency of the transmitting institution with the program data and stores such data which are necessary for the tuning of the receiver circuit to the program contribution, and which reads the program data out of the first storage device according to the inscribed program and stores this program information together with the tuning data in a program journal storage device (15) in the form of lists according to a preset ordering algorithm so that it can be called up, that the program data filed in the program journal storage device (15) are deliverable page by page to a control of a display according to the possibility of representation on the display (9) by input of an indication command through actuation of corresponding setting elements at the local control (17) at the apparatus or a remote control (18) and that the display (9) indicates the presented program information page by page, that a selecting equipment is provided for the selection of a program line and that the receiver circuit of the apparatus after selection of the program data automatically receives the channel data or the frequency data for the tuning of the reception out of the program journal storage device (15).

33. Circuit arrangement according to claim 32, characterised in that the display is component of the apparatus or component of an indicating device of an apparatus, which undertakes the evaluation, with performing circuit arrangement.

34. Circuit arrangement according to claim 33, characterised in that the performing circuit arrangement is component of a video recorder, with which a television receiver or monitor is connected, and indicates the program data, which are filed in the program journal storage device and receivable by way of a bus, on the picture screen or a display.

35. Circuit arrangement according to claim 33 or 34, characterised in that the performing circuit arrangement is component of a television receiver or video recorder for the reception of VPS-signals or radio receiver for the reception of RDS-signals or other program data radiated with the program by a transmitting institution and that the display is present in the radio receiver or has a connection to a television apparatus, on the picture screen of which the program journal can be represented.

36. Circuit arrangement according to claim 34 or 35, characterised in that a bidirectional bus, by way of which commands from the indicating apparatus or from a remote control are enterable for the control of the processor control in the evaluating apparatus in order to control an indication of the program data according to certain selection criteria or for the selection of program data for the reproduction or recording, is connected between the indicating apparatus and the evaluating apparatus.

37. Circuit arrangement according to one of the claims 32 to 36, characterised in that additional function keys or setting members are present in the operating field of the evaluating apparatus or on the remote control transmitter and that, on their actuation, the data in the program journal storage device are brought to indication according to certain evaluation criteria in accordance with the certain programs entered in the processor of the processor control.

38. Circuit arrangement according to one of the claims 32 to 37, characterised in that the processor control controls a tuning circuit for an automatic search run and files the transmitters, which have been ascertained in the automatic search run, with the program data, which have been obtained on the reception of these transmitters and are associated with the transmitter or unrelated transmitters, but radiated by the same transmitting institution, or files that address for access to the tuning storage device, under which the found transmitter can be called up, wherein the processor program does not allocate the program data of the unrelated transmitters to the tuning data.

39. Circuit arrangement according to claim 38, characterised in that a storage device with a transmitter table is contained in the tuning circuit and that the processor control undertakes an allocation to the transmitters by reference to the received program data and accordingly files the program data in the program journal storage device in association with the corresponding transmitting institution.

40. Circuit arrangement according to claim 32, characterised in that by input of the serial numbers in the program journal, which is indicated on the display, by way of the input keyboard, the receiver circuit tunes to the selected transmitter by the take-over of the program data and switches the program on or records the program either at the same time or, in the case of a presetting, at the instant of the switching-on instant associated with the program data.

41. Circuit arrangement according to claim 32 or 40, characterised in that the receiver circuit comprises a VPS-decoder and that the processor circuit associates the VPS-data with the program data and, in dependence on the VPS-data, switches on the apparatus synchronously in time or during a defined time window also the reception circuit to waiting position and the switching to program reception or the switching to the recording takes place only when the switch-on signal of the VPS-coded transmission is present.

42. Circuit arrangement according to claim 32, characterised in that the processor control after a program evaluates the indicated transmission time in the program journal and in dependence thereon performs the control of the tuning circuit to the transmitter, from which the program is receivable.

43. Circuit arrangement according to claim 32 in conjunction with a television reception apparatus, characterised in that on the switching-on of a current program, a control automatically initiates the fading-out of the program journal on the display and indicates the received picture information of the current program.

44. Circuit arrangement according to claim 32, 33 or 34 characterised in that the indicating display is a coloured indicating display and that preset program data for a reproduction or a recording are filed in terms of colour by a selection command or a priority command during the selection, wherein the preselection or the priority are filed with different colours or the script image representation of the program appears in other colours and that the colour identification is also filed in the program journal storage device to be evaluatable as additional data.

45. Circuit arrangement according to claim 32, characterised in that the evaluating circuit comprises a separate receiver circuit and that the second receiver circuit is provided for the reception of current transmissions or for the reception of transmitters tuned by way of the program selection.

46. Circuit arrangement according to claim 32, characterised in that a time comparator circuit, in which the actual time is compared with the preset switching-on time and/or switching-off time, is provided in the apparatus and that the representation or recording of the program is switched on and/or off in dependence on the times of switching on and/or off, which are associated with the program data.

47. Circuit arrangement according to claim 32, characterised in that the receiver circuit comprises a demodulator for digitally transmitted data and that the data transmitted in the service channel are evaluated by the processor control to the extent that they contain program data.

48. Circuit arrangement according to claim 32, characterised in that the receiver circuit is such as for the reception of signals which are offered terrestially distributed by way of satellite or by way of channels.

49. Circuit arrangement according to claim 32, characterised in that the apparatus comprises a printer interface.

50. Circuit arrangement according to claim 32, characterised in that the apparatus comprises an interface for a connectable computer and that the processor transmits the data filed or filable in the program journal storage device to the connected computer over a longer time span by a transmission program.

51. Circuit arrangement according to claim 32, characterised in that a generator is provided in the apparatus and, under the control of the process control equipment, causes the search run through all reception ranges continuously or discontinuously or at certain times or in dependence on the operative switching of the apparatus (stand-by) full operation switching-on/switching-off and that the program data received in that case are evaluated and entered into the program journal storage device or the data entered there are written over or already stored data are not taken over.

52. Circuit arrangement according to claim 32, characterised in that a fading-over circuit for the fading-over of the program journal into a represented television picture of a current receivable transmission is provided in the apparatus.

53. Circuit arrangement according to claim 32, characterised in that a change-over switch, which causes the switching-over of the operation of the receiver circuit to channel selection or to program selection, is provided in the operating field.

54. Circuit arrangement according to claim 32, characterised in that the program journal storage device is an erasable read/write memory (RAM, EEPROM).

55. Circuit arrangement according to claim 54, characterised in that the read/write memory is an exchangeable memory which is insertable into the apparatus.

56. Circuit arrangement according to claim 55, characterised in that the exchangeable memory is a chip card with processor and storage device.

## Revendications

1. Procédé d'élaboration d'un magazine de programmes électronique pour des programmes de télévision et/ou de radio, dans un appareil destiné à recevoir des signaux de télévision et/ou de radio à partir de diverses stations émettrices, qui envoient des informations sur les programmes, en tant que données de programmes en pages récapitulatives de programmes en vidéotexte (télétexte) de la station émettrice particulière et/ou d'autres stations émettrices, ou bien qui les fournissent dans des réseaux câblés, et/ou qui envoient des informations sur les programmes, en tant qu'informations préalables sur des radiodiffusions, ou bien qui les fournissent à des réseaux câblés, et pour le réglage du circuit de réception de l'appareil, comportant les particularités suivantes :
a) les données de programmes reçues des pages de vidéotexte (télétexte) ou des informations préalables sur les programmes, qui sont reçues avec les signaux radio, sont décodées par un décodeur et listées sous une forme tabellaire, enregistrées dans une mémoire de magazine de programmes et présentées sur un visuel ;
b) au moins un signe distinctif reçu, caractérisant le programme correspondant, est évalué et est associé à la liste des données de programmes ;
c) un circuit de traitement trie, au moyen d'un programme enregistré, selon un algorithme prédéfini d'ordre, toutes les données de programmes reçues, en fonction de certains critères prédéfinis de mémorisation et les enregistre dans la mémoire de magazine de programmes, soit automatiquement soit après actionnement d'une touche de transfert ;
d) des données, automatiquement associées aux données de programmes dans la mémoire de magazine de programmes et concernant le canal récepteur ou la fréquence de réception de l'émetteur, sont saisies et enregistrées en mémoire et elles sont indispensables pour pouvoir accorder le circuit de réception sur l'article du programme ;
e) la saisie des données d'accord s'effectue en fonction de l'accord sélectif de l'appareil récepteur sur le canal correspondant ou sur la fréquence correspondante ;
f) les données d'accord sont affichées ou cachées ;
g) par l'actionnement d'un dispositif d'appel, les données de programmes en mémoire sont extraites de la mémoire de magazine de programmes et présentées en pages sur le visuel selon des critères prédéfinis de tri, qui peuvent être différents des critères de mémorisation ;
h) pour l'accord de l'appareil sur un émetteur, on choisit une ligne de présentation des données de programmes, et les données associées au canal récepteur ou à la fréquence sont alors acheminées vers le circuit d'accord du circuit de réception.

2. Procédé selon la revendication 1, caractérisé par les étapes suivantes du procédé :
a) les pages de vidéotexte (télétexte) provenant d'un émetteur, ou bien les pages d'informations sur les programmes, sont contrôlées quant aux tableaux de programmes ou aux données d'information sur les programmes qu'elles contiennent ;
b) si la présence de données d'information sur les programmes ou bien de tableaux est établie, alors les données de programmes indiquées sont prises en charge ;
c) dans la mesure où il s'agit de données de programmes, qui ne sont pas déjà en mémoire, celles-ci sont alors insérées selon un algorithme d'ordre et si les données de programmes sont déjà en mémoire, elles sont alors recouvertes ou supprimées ;
d) par un accord sélectif, les pages de vidéotexte (télétexte) ou les informations sur les programmes, dans le cas d'émissions radio, des autres émetteurs que l'on peut capter sont examinées de la même manière et les données associées aux programmes sont mises en ordre selon l'étape b du procédé et également enregistrées dans la mémoire de magazine de programmes ;
e) la saisie des données de programmes en listes s'effectue sur un laps de temps déterminé, au moyen des indications de dates d'émissions (jour calendaire, heure) associées aux données de programmes, par exemple sur un laps de temps d'une semaine.

3. Procédé selon la revendication 1 ou 2, caractérisé en ce que, dans la ligne d'affichage d'un programme, des numéros d'ordre ou des signes caractéristiques sont placés avant ou après les données de programmes présentées dans les lignes de programmes.

4. Procédé selon la revendication 3, caractérisé en ce que l'accord de l'appareil pour la réception d'un programme choisi à partir du magazine électronique de programmes s'effectue par entrée du numéro d'ordre ou du signe caractéristique associé au programme, ou bien en déplaçant un curseur pour indiquer la ligne du programme au moyen du curseur et en émettant une instruction de prise en charge en appuyant sur une touche d'une unité de transfert, et en ce que le programme est reçu au moment indiqué dans l'affichage du programme, en tant qu'heure de l'émission tandis que, si le programme choisi est déjà en cours de diffusion, celui-ci est automatiquement immédiatement présenté ou bien reproduit et, lors de la réception de l'émission télévisée, le magazine de programmes est supprimé lors de la présentation sur le même visuel, ou bien l'affichage n'est supprimé que lors de l'actionnement d'une touche de commande.

5. Procédé selon la revendication 4, caractérisé en ce que sont présélectionnées, pour les données de programmes, qui ont été choisies pour une réception, des données supplémentaires de lancement, qui sont indiquées de manière nette sur l'écran, par exemple par "présélection" ou par un repère ou par mise en couleur des lignes de programmes.

6. Procédé selon la revendication 5, caractérisé en ce que les données de présélection sont des données de priorité qui sont associées aux données de programme, par actionnement d'une unité de réglage de priorité, et en ce que, lors d'un chevauchement de programmes ou lors de la réception d'une émission en cours, le récepteur procède, en fonction des données de priorité, à la commutation ou au lancement, dans le circuit d'accord, concernant l'émetteur par l'intermédiaire duquel est émis le programme ayant la priorité.

7. Procédé selon la revendication 5 ou 6, caractérisé en ce que l'unité de commande de traitement, pour la sélection des données de programmes choisies par présélection ou des données de lancement pourvues de données de priorité, les copie dans une autre mémoire ou bien appelle, à partir de la mémoire de magazine de programmes, les données de lancement ou les données de priorité, qui sont associées aux données de programmes, et les compare à des données de temps réel et, si les données de lancement et les données de temps réel concordent, elle procède à l'accord sur le programme choisi ou bien elle déclenche cet accord dans le circuit d'accord.

8. Procédé selon la revendication 1 ou 7, caractérisé en ce que sont associées aux données de programmes des données destinées à la commande en fonction des programmes (commande VPS ou RDS), qui sont indiquées de manière visible ou mémorisées de manière cachée, et en ce que le récepteur, lors de l'utilisation d'un seul circuit de réception, pendant la réception en cours d'une émission ou bien à l'état arrêté de l'unité de reproduction, surveille en continu pendant au moins une fenêtre temporelle déterminée avant le programme attendu, l'émetteur en ce qui concerne des signaux VPS ou RDS et, par une signalisation du moment de lancement au moyen des données de réception, il procède à la commutation sur le programme caractérisé, par la commande en fonction du programme, ou bien démarre la réception de celui-ci.

9. Procédé selon la revendication 8, caractérisé en ce que deux circuits de réception peuvent être attaqués par le circuit de traitement ou par plusieurs circuits de traitement, le deuxième circuit de réception servant à la surveillance de la commande en fonction des programmes (VPS, RDS).

10. Procédé selon la revendication 1, 8 ou 9, caractérisé en ce que, dans le cas de l'utilisation dans un appareil récepteur de télévision ou dans un appareil de radio, l'émission chaque fois présentée est arrêtée par le choix d'un autre programme, à partir du magazine de programmes, ou par commutation sur un autre émetteur de manière synchronisée avec la fin indiquée de l'émission, ou en fonction des données de commande en fonction des programmes du système VPS ou RDS.

11. Procédé selon la revendication 1, 2 ou 7, caractérisé en ce que des données de programmes, enregistrées dans la mémoire de magazine de programmes, sont automatiquement effacées par la commande de traitement lorsque la fin du programme ne peut plus être reçue du fait du laps de temps ou du fait d'une identification dépendant du programme.

12. Procédé selon la revendication 1 ou 2, caractérisé en ce que les pages de vidéotexte (pages de télétexte) sont remplacées par des données du canal de service, lors d'une transmission numérique de signaux de télévision, et en ce que le transfert des données de programmes dans la mémoire de magazine de programmes selon le procédé indiqué s'effectue de la même manière.

13. Procédé selon la revendication 1 ou 2, caractérisé en ce que des données supplémentaires de verrouillage peuvent être ajoutées à chaque ligne des programmes et aux données qui y sont indiquées, et en ce que les lignes de programmes peuvent être affichées au moyen d'indicateurs préréglés ou insérés ou accolés ou au moyen d'un repère correspondant ou d'une mise en couleur lors de l'entrée d'un signal de verrouillage, par actionnement d'une unité d'entrée de signaux de verrouillage, et en ce que le verrouillage ne peut être supprimé que par une clé d'accès connue de l'utilisateur autorisé.

14. Procédé selon la revendication 13, caractérisé en ce que, au moyen d'un déplacement du curseur et de la manipulation d'une touche, les programmes bloqués peuvent être affichés par une identification en couleur ou par un autre signe caractéristique et en ce que, dans le cas d'un programme bloqué, l'appareil bloque, à l'heure prévue, un lancement du programme ou bien saute le programme.

15. Procédé selon l'une des revendications précédentes, caractérisé en ce que les données, présentes dans la mémoire de magazine de programmes, qui accèdent à l'affichage, ou bien la totalité des données, y compris les données cachées, peuvent être sorties, par l'intermédiaire d'une interface d'imprimante de l'appareil, vers une imprimante lors de l'entrée d'une instruction de commande d'impression par l'intermédiaire de l'unité de commande de traitement.

16. Procédé selon la revendication 1 ou 2, caractérisé en ce que les données de programmes, présentes dans la mémoire de magazine de programmes, sont soumises à un ordre déterminé de sélection, selon des critères aléatoires par des entrées correspondantes par l'intermédiaire d'un clavier ou par déplacement d'un curseur sur l'écran par l'utilisateur, et en ce que les données ordonnées sont affichées de manière correspondante au programme d'ordre choisi.

17. Procédé selon la revendication 1 ou 2, caractérisé en ce que les données, présentes dans la mémoire de magazine de programmes, sont transmises, par l'intermédiaire d'une interface, à un ordinateur que l'on peut raccorder de manière interne à l'appareil ou externe, par entrée d'une instruction de transfert, cet ordinateur gérant des listes plus longues de données de programmes sur des périodes plus longues, et correspondant avec le processeur de la commande de traitement dans l'appareil, de telle manière que les données de programmes, mémorisées dans la mémoire de magazine de programmes, soient actualisées.

18. Procédé selon la revendication 1 ou 2, caractérisé en ce que la mémoire de magazine de programmes est une mémoire qui peut être connectée à l'appareil, qui peut être raccordée à chaque appareil avec la même interface servant à la programmation de l'appareil, les données présentes dans la mémoire de magazine de programmes à surimpression pouvant être actualisées dans un autre appareil ou bien cette mémoire pouvant être bloquée contre tout recouvrement par de nouvelles données.

19. Procédé selon la revendication 1 ou 18, caractérisé en ce que les données, présentes dans la mémoire de magazine de programmes, peuvent être rafraîchies cycliquement au moins une fois par jour ou bien en permanence, et en ce que de nouvelles données, récemment ajoutées et provenant des pages de vidéotexte ou des pages d'informations sur les programmes, sont complétées, et en ce que des données existantes ne sont pas renouvelées ou recouvertes.

20. Procédé selon la revendication 1 ou 19, caractérisé en ce que, lors de l'arrêt de l'appareil arrêté ou lors du passage de l'appareil du mode de fonctionnement normal au mode de veille, ou bien au cours du fonctionnement de veille, les données, présentes dans la mémoire de magazine de programmes, sont rafraîchies, renouvelées ou complétées, et en ce que l'appareil est arrêté avec une temporisation ou passe au mode de veille de manière temporisée pendant l'actualisation des données dans la mémoire de magazine de programmes, la temporisation correspondant au temps nécessaire pour l'évaluation permettant d'actualiser les données de programmes, ou en ce qu'un rafraîchissement des données est effectué en permanence pendant le fonctionnement de veille.

21. Procédé selon la revendication 20, caractérisé en ce que, pendant le rafraîchissement des données, au moins les composants des circuits de l'appareil, nécessaires pour ce faire, restent en fonction tandis que le visuel est mis hors fonction.

22. Procédé selon la revendication 1 ou 2, caractérisé en ce que les données, provenant de la mémoire de magazine de programmes, sont superposées à une image de télévision en cours présentée sur le visuel, ou bien affichées dans une zone partielle choisie du visuel.

23. procédé selon l'une des revendications 1, 2 ou 16, caractérisé en ce que, par appel d'un programme déterminé de tri, les données de programmes, provenant de la mémoire de magazine de programmes, sont affichées de manière triée de telle façon que, lors de l'appel, des programmes en cours ou des programmes que l'on peut capter dans une fenêtre horaire suivante ou bien dans une fenêtre journalière, puissent être affichés.

24. Procédé selon la revendication 1 ou 2, caractérisé en ce que les données de programmes sont en outre classées en fonction des types de programmes et/ou des contenus des programmes et en ce que, lors de l'appel des données de programmes selon les types et les teneurs des programmes, par exemple programmes de sport, programmes scientifiques, programmes musicaux, programmes de divertissements et programmes d'actualités, ainsi que selon d'autres critères d'ordre de programmes, elles puissent être appelées et affichées de manière ordonnée.

25. Procédé selon la revendication 1 ou 2, caractérisé en ce que les données de programmes, présentes dans la mémoire de magazine de programmes, sont des adresses destinées à appeler des présentations détaillées des programmes, qui sont conservées dans une autre mémoire, et en ce que les présentations détaillées des programmes peuvent être appelées par lancement d'une fonction de changement de défilement des pages.

26. Procédé selon la revendication 20 ou 21, caractérisé en ce que des programmes, classés selon des domaines thématiques, peuvent être bloqués à la réception, par introduction de signaux de blocage, et libérés par introduction d'un signal de neutralisation.

27. Procédé selon la revendication 1 ou 2, caractérisé en ce que, lors du passage de l'appareil de l'état d'arrêt au fonctionnement de veille ou à l'état de fonctionnement normal, l'appareil interroge tous les émetteurs qui peuvent être captés en fonction des données de programmes et la commande de traitement procède à une actualisation des données de programmes dans la mémoire de magazine de programmes.

28. Procédé selon la revendication 1 ou 2, caractérisé en ce que les données de programmes contiennent au moins les codages suivants ou du moins quelques-uns de ceux-ci, qui peuvent être enregistrés dans la mémoire de magazine de programmes, globalement ou de manière sélective :
- désignation du programme
- type de programme
- station émettrice (abréviation)
- abréviation de l'émetteur, par exemple BR1
- activation VPS (oui/non)
- activation RDS (oui/non)
- heure de début du programme
- heure de fin du programme
- données de classification du programme (musique, divertissement, actualités)
- données d'activation de la radio, pour pouvoir commander, e n fonction d e signaux d'identification, qui sont transmis avec l'émission radiophonique, l'enregistrement ou la présentation, lorsqu'il s'agit d'émissions codées en conséquence
- données de description de programme.

29. Procédé selon la revendication 1=ou 2, caractérisé en ce qu'il est combiné à un procédé de choix classique de programmes dans un appareil, de telle manière que puisse être utilisé soit le choix classique de programmes soit le choix de programmes soit l'affichage des programmes selon le procédé indiqué pour le fonctionnement de l'appareil.

30. Procédé selon l'une des revendications précédentes, caractérisé par l'utilisation dans des appareils récepteurs de télévision ou dans des appareils combinés télévision/radio ou dans des appareils d'enregistrement vidéo et/ou audio, l'ensemble des appareils servant à la réception d'émissions analogiques et/ou transmises par voie numérique dans des modèles mobiles ou fixes, ou en liaison avec des appareils, qui contiennent en mémoire une pluralité de programmes, tels que des lecteurs de CD.

31. Procédé selon l'une des revendications précédentes, caractérisé en ce que les données de programmes sont enregistrées sur un CD et peuvent être lues à partir de celui-ci, en ce qu'elles sont listées sous la forme d'un magazine de programmes, et en ce que les données de programmes, enregistrées dans la mémoire de magazine de programmes, peuvent être extraites, par l'intermédiaire de la commande de traitement, pour être affichées sur le visuel, le visuel en tant qu'afficheur faisant partie de l'appareil ou d'un appareil d'affichage raccordé.

32. Montage destiné à la mise en oeuvre du procédé selon l'une des revendications précédentes, caractérisé en ce que sont contenus, dans un appareil récepteur, un circuit de réception (6) avec un syntoniseur, un amplificateur de fréquence intermédiaire et un démodulateur, un décodeur de vidéotexte (12) ou un décodeur pour des informations sur les programmes, transmises par la radio, dans une période future déterminée de programmes emis, en ce qu'une première mémoire est présente pour conserver les données de programmes contenues dans les pages transmises, en ce qu'il est prévu une commande de traitement à microprocesseur, qui associe automatiquement les données du canal récepteur ou de la fréquence de réception de l'émetteur aux données de programmes et enregistre ces données lesquelles sont indispensables pour pouvoir accorder le circuit de réception sur l'article de programme, qui extrait de la première mémoire des données de programmes selon un programme enregistré, et fournit celles-ci en listes en commun avec les données d'accord selon un algorithme prédéfini d'ordre, à une mémoire de magazine des programmes (15) de manière adressable, et en ce que, par l'entrée d'une instruction d'affichage en actionnant des éléments correspondants de réglage sur un dispositif local de commande (17) au niveau de l'appareil ou sur une télécommande (18), les données de programmes conservées dans la mémoire de magazine de programme (15) peuvent être sorties en pages au niveau d'une commande d'un visuel, en fonction de la possibilité de présentation sur le visuel (9), et en ce que le visuel (9) affiche en pages les informations de programmes préparées, en ce qu'une unité de sélection est prévue pour choisir une ligne de données de programme, et en ce que le circuit de réception de l'appareil reçoit automatiquement, après le choix des données de programme, les données de canal et/ou les données de fréquence pour la syntonisation de la réception de la mémoire de magazine de programmes (15).

33. Montage selon la revendication 32, caractérisé en ce que le visuel fait partie de l'appareil ou fait partie d'un appareil afficheur, raccordé par un montage d'exécution à l'appareil procédant à l'exploitation.

34. Montage selon la revendication 33, caractérisé en ce que le montage d'exécution fait partie d'un enregistreur vidéo, auquel est relié un récepteur de télévision ou un récepteur de contrôle, qui présente sur l'écran ou bien sur un visuel, les données de programmes conservées dans la mémoire de magazine de programmes et qui peuvent être reçues par l'intermédiaire d'un bus.

35. Montage selon la revendication 33 ou 34, caractérisé en ce que le montage d'exécution fait partie d'un récepteur de télévision ou d'un enregistreur vidéo pour la réception de signaux VPS, ou d'un récepteur radio pour la réception de signaux RDS, ou autres, avec les données de programmes émises par une station émettrice, et en ce que le visuel est présent dans le récepteur radio ou bien comporte un raccordement à un appareil de télévision, sur l'écran duquel le magazine de programmes peut être présenté.

36. Montage selon la revendication 34 ou 35, caractérisé en ce que, entre l'appareil afficheur et l'appareil d'exploitation, un bus bidirectionnel est monté, par l'intermédiaire duquel des instructions provenant de l'appareil afficheur ou d'une télécommande peuvent être fournies afin de commander la commande de traitement dans l'appareil d'exploitation, pour effectuer un affichage des données de programmes selon des critères définis de sélection ou pour choisir des données de programme pour la reproduction ou pour l'enregistrement.

37. Montage selon l'une des revendications 32 à 36,
caractérisé en ce que, sur le panneau de commande de l'appareil d'exploitation ou sur la télécommande, des touches supplémentaires de fonction ou des organes de réglage sont prévus, et en ce que, lors de l'actionnement de ceux-ci, en fonction des programmes définis entrés dans le processeur de la commande de traitement, les données présentes dans la mémoire de magazine de programmes sont amenées à l'affichage selon des critères définis d'évaluation.

38. Montage selon l'une des revendications 32 à 37, caractérisé en ce que la commande de traitement commande un circuit d'accord pour une recherche automatique des émetteurs et met en mémoire les émetteurs déterminés lors de la recherche automatique avec les données de programmes obtenues lors de la réception de ces émetteurs, associées à l'émetteur ou à des émetteurs étrangers, mais toutefois émises à partir de la même station émettrice, ou bien met en mémoire l'adresse pour accéder à la mémoire d'accords, dans laquelle peut être appelée l'adresse des émetteurs détectés, le programme de traitement n'associant pas les données de programmes des émetteurs étrangers aux données d'accord.

39. Montage selon la revendication 38, caractérisé en ce qu'une mémoire, comportant une table d'émetteurs, est contenue dans le circuit d'accord, et en ce que la commande de traitement procède, à l'aide des données de programmes reçues, à une association avec les émetteurs et, en fonction des données de programmes, à l'enregistrement avec classement selon la station émettrice correspondante, dans la mémoire de magazine de programmes.

40. Montage selon la revendication 32, caractérisé en ce que, par l'intermédiaire du clavier d'entrée, en entrant les numéros actuels présents dans le magazine de programmes, qui est affiché sur le visuel, le circuit de réception procède, en prenant en charge les données de programme, à la syntonisation sur l'émetteur sélectionné et lance simultanément le programme ou bien, dans le cas d'un réglage préalable, enregistre le programme au moment du temps de lancement associé aux données de programme.

41. Montage selon la revendication 32 ou 40, caractérisé en ce que le circuit de réception présente un décodeur VPS, et en ce que le circuit de traitement associe les données VPS aux données de programmes et, en fonction des données VPS, l'appareil met également en position de saisie, de manière synchrone dans le temps ou bien pendant une fenêtre temporelle définie, le circuit de réception, et l'accrochage du début du programme ou bien le passage à l'enregistrement ne peut avoir lieu que lorsque le signal de lancement de l'émission codée VPS est présent.

42. Montage selon la revendication 32, caractérisé en ce que la commande de traitement évalue, selon un programme, le créneau indiqué dans la magazine de programmes et, en fonction de cela, effectue la commande du circuit d'accord sur l'émetteur permettant la réception du programme.

43. Montage selon la revendication 32, en liaison avec un appareil récepteur de télévision, caractérisé en ce que, lors du démarrage d'un programme en cours, une commande déclenche automatiquement la suppression du magazine de programmes sur le visuel et présente les images reçues du programme en cours.

44. Montage selon la revendication 32, 33 ou 34, caractérisé en ce que le visuel est un visuel de présentation en couleurs, et en ce que des données préréglées de programmes pour une reproduction ou un enregistrement lors du choix, au moyen d'une instruction de sélection ou d'une instruction de priorité, ressortent par des couleurs, la présélection ou la priorité étant indiquées par des couleurs différentes ou bien la présentation par des caractères du programme apparaissant en d'autres couleurs, et en ce que la caractéristique de couleur est enregistrée, de manière lisible, en tant que donnée supplémentaire dans la mémoire de magazine de programmes.

45. Montage selon la revendication 32, caractérisé en ce que le circuit d'exploitation présente un circuit séparé de réception, et en ce que le deuxième circuit de réception est prévu pour la réception d'émissions en cours ou pour la réception des émetteurs accordés par l'intermédiaire de la sélection des programmes.

46. Montage selon la revendication 32, caractérisé en ce qu'il est prévu, dans l'appareil, un circuit comparateur de temps, dans lequel le temps réel est comparé à l'heure prédéfinie de démarrage et/ou d'arrêt, et en ce que, en fonction des heures de démarrage et/ou d'arrêt associées aux données de programmes, la présentation ou l'enregistrement du programme est lancé et/ou coupé.

47. Montage selon la revendication 32, caractérisé en ce que le circuit de réception présente un démodulateur pour des données transmises par voie numérique, et en ce que les données transmises dans le canal de service sont exploitées par la commande de traitement, dans la mesure où elles comportent des données de programmes.

48. Montage selon la revendication 32, caractérisé en ce que le circuit de réception est un circuit permettant la réception de signaux qui sont offerts, de manière répartie, par voie terrestre, par satellite ou par canaux.

49. Montage selon la revendication 32, caractérisé en ce que l'appareil présente une interface d'imprimante.

50. Montage selon la revendication 32, caractérisé en ce que l'appareil présente une interface pour un ordinateur à raccorder, et en ce que le processeur transmet les données conservées dans la mémoire de magazine de programmes, ou les données qui peuvent être conservées dans celle-ci pendant une plus longue période, à l'ordinateur raccordé, au moyen d'un programme de transfert.

51. Montage destiné à la mise en oeuvre selon la revendication 32, caractérisé en ce qu'il est prévu dans l'appareil un générateur qui effectue, de manière commandée par l'unité de commande de traitement, la détection des émetteurs dans toutes les plages de réception, de manière continue ou discontinue ou à des instants déterminés ou en fonction du circuit de fonctionnement de l'appareil (veille) lance/arrête le fonctionnement intégral, et en ce que les données de programmes alors reçues sont évaluées et enregistrées dans la mémoire de magazine de programmes, ou les données qui y sont enregistrées sont recouvertes ou les données déjà en mémoire ne sont pas prises en charge.

52. Montage selon la revendication 32, caractérisé en ce qu'il est prévu dans l'appareil un montage mélangeur servant à fondre le magazine de programmes dans une image de télévision présentée d'une émission en cours.

53. Montage selon la revendication 32, caractérisé en ce qu'il est prévu un commutateur dans le panneau de commande pour effectuer la commutation du fonctionnement du circuit de réception sur le choix du canal ou sur le choix du programme.

54. Montage selon la revendication 32, caractérisé en ce que la mémoire de magazine de programmes est une mémoire effaçable à lecture et écriture (RAM, EEPROM).

55. Montage selon la revendication 54, caractérisé en ce que la mémoire à lecture/écriture est une mémoire amovible enfichable dans l'appareil.

56. Montage selon la revendication 55, caractérisé en ce que la mémoire amovible est une carte à puce avec processeur et mémoire.
